(19) Europäisches Patentamt
European Patent Office
Office européen des brevets

(11) **EP 3 859 715 A1**

(12) **EUROPEAN PATENT APPLICATION**
published in accordance with Art. 153(4) EPC

(43) Date of publication:
04.08.2021 Bulletin 2021/31

(51) Int Cl.:
*G09B 23/28* (2006.01)      *C08G 18/06* (2006.01)

(21) Application number: 19864181.3

(22) Date of filing: 20.09.2019

(86) International application number:
PCT/JP2019/036967

(87) International publication number:
WO 2020/066892 (02.04.2020 Gazette 2020/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.09.2018  JP 2018183303
21.12.2018  JP 2018239714

(71) Applicant: Mitsui Chemicals, Inc.
Minato-ku
Tokyo 105-7122 (JP)

(72) Inventors:
• KANAYAMA, Hiroshi
Sodegaura-shi, Chiba 299-0265 (JP)
• ONO, Takashi
Tokyo 105-7122 (JP)
• OMATA, Seiji
Kumamoto-shi, Kumamoto 860-8555 (JP)
• ARAI, Fumihito
Tokyo 113-8656 (JP)

(74) Representative: Hoffmann Eitle
Patent- und Rechtsanwälte PartmbB
Arabellastraße 30
81925 München (DE)

(54) **SIMULATED SCLERA AND SIMULATED EYEBALL**

(57)      A simulated sclera 2 is obtained by including a plurality of fiber layers (a) and a resin (b) in contact with the fiber layer (a), having a fiber diameter of a fiber constituting the fiber layer (a) of 0.6 μm or more and 170.0 μm or less, laminating the plurality of fiber layers (a), and impregnating the laminated fiber layers (a) with the resin (b).

FIG. 1

**Description**

TECHNICAL FIELD

The present invention relates to a simulated sclera, a simulated eyeball, and a method for producing a simulated sclera.

BACKGROUND ART

For example, ocular diseases such as cataract and glaucoma have been treated with eyeball surgery. On the other hand, as an eyeball is an organ involved in vision, skilled arts are required for the eyeball surgery. However, it is difficult to practice the eyeball surgery in clinical sites because guidance is heard to the patient due to local anesthesia. Therefore, a simulated eyeball has been used to practice the eyeball surgery.

Specifically, as the simulated eyeball, a simulated eyeball including a posterior segment provided with a simulated retinal layer and the like, and an anterior segment provided with a simulated sclera or cornea and the like has been proposed. It has also been proposed that such a simulated eyeball is, for example, fixed to a base portion by a simulated muscle and the like, and housed in a housing to be used in the practice of the eyeball surgery (ref: for example, Patent Document 1).

Citation List

Patent Document

Patent Document 1: U.S. Patent Application Publication No. 2016/0063898

SUMMARY OF THE INVENTION

PROBLEM TO BE SOLVED BY THE INVENTION

Therefore, the simulated eyeball is required to feel closer to the clinical sites.

Above all, in the simulated eyeball for the operation practice of the glaucoma, a sense of incision in inserting the sclera with a scalpel and the like, and a sense of thinly cutting in pulling the sclera with the incision and the like are required.

The present invention provides a simulated sclera having a sense of incision and a sense of thinly cutting close to an actual eyeball (sclera), a simulated eyeball including the simulated sclera, and a method for producing a simulated sclera.

MEANS FOR SOLVING THE PROBLEM

The present invention [1] includes a simulated sclera including a plurality of fiber layers (a) and a resin (b) in contact with the fiber layer (a), wherein a fiber diameter of a fiber constituting the fiber layer (a) is 0.6 $\mu$m or more and 170.0 $\mu$m or less.

The present invention [2] includes the simulated sclera described in the above-described [1], wherein the peel strength between the plurality of fiber layers (a) is 0.20 N/cm or more.

The present invention [3] includes the simulated sclera described in the above-described [1] or [2], wherein the Asker F hardness of the resin (b) is 45 or more and 95 or less, or the Asker C hardness of the resin (b) is 5 or more and 35 or less.

The present invention [4] includes the simulated sclera described in any one of the above-described [1] to [3], wherein the fiber layer (a) includes a nonwoven fabric.

The present invention [5] includes the simulated sclera described in any one of the above-described [1] to [4], wherein the resin (b) includes a polyurethane.

The present invention [6] includes the simulated sclera described in any one of the above-described [1] to [5] further including a surface-coated layer (c).

The present invention [7] includes the simulated sclera described in any one of the above-described [1] to [6] for the eyeball surgery practice.

The present invention [8] includes a simulated eyeball including the simulated sclera described in any one of the above-described [1] to [7].

The present invention [9] includes a method for producing a simulated sclera, the simulated sclera including a plurality of fiber layers (a) and a resin (b) in contact with the fiber layer (a) and having a fiber diameter of a fiber constituting the fiber layer (a) of 0.6 μm or more and 170.0 μm or less, including the steps of laminating the plurality of fiber layers (a) and impregnating the laminated fiber layers (a) with the resin (b).

EFFECT OF THE INVENTION

The simulated sclera of the present invention includes a plurality of fiber layers (a) and a resin (b) in contact with the fiber layer (a). Therefore, only a portion of the plurality of fiber layers (a) can be pulled to obtain a sense of thinly cutting close to the sclera of an actual eyeball.

In addition, in the simulated sclera of the present invention, a fiber diameter of a fiber constituting the fiber layer (a) is 0.6 μm or more and 170.0 μm or less. Therefore, it is possible to obtain a sense of incision close to the sclera of the actual eyeball.

Further, since the simulated eyeball of the present invention includes the simulated sclera of the present invention, it has an excellent sense of incision and an excellent sense of thinly cutting.

Also, according to the method for producing a simulated sclera of the present invention, it is possible to obtain a simulated sclera having an excellent sense of incision and an excellent sense of thinly cutting.

BRIEF DESCRIPTION OF THE DRAWINGS

FIG. 1 shows a cross-sectional view of a main part of one embodiment (embodiment in which three or more fiber layers are disposed in lamination) of a simulated sclera and a simulated eyeball of the present invention.
FIG. 2 shows a process view showing a method for producing the simulated sclera shown in FIG. 1:

FIG. 2A illustrating a step of laminating a plurality of fiber layers (a) and
FIG. 2B illustrating a step of disposing the fiber layers (a) in a mold.

FIG. 3, subsequent to FIG. 2, shows a process view showing a method for producing the simulated sclera shown in FIG. 1:

FIG. 3A illustrating a step of impregnating the fiber layers (a) with the resin (b) and
FIG. 3B illustrating a step of forming a surface-coated layer (c).

FIG. 4 shows a cross-sectional view of a main part of another embodiment (embodiment in which two fiber layers are laminated to be disposed in a middle portion in a thickness direction of a simulated sclera) of the simulated sclera and a simulated eyeball of the present invention.
FIG. 5 shows a cross-sectional view of a main part of another embodiment (embodiment in which two fiber layers are laminated to be disposed at one side in a thickness direction of a simulated sclera) of the simulated sclera and a simulated eyeball of the present invention.
FIG. 6 shows a cross-sectional view of a main part of another embodiment (embodiment in which two fiber layers are laminated to be disposed at the other side in a thickness direction of a simulated sclera) of the simulated sclera and a simulated eyeball of the present invention.
FIG. 7 shows a cross-sectional view of a main part of another embodiment (embodiment in which two fiber layers are disposed in a middle portion of a simulated sclera without lamination) of the simulated sclera and a simulated eyeball of the present invention.
FIG. 8 shows a cross-sectional view of a main part of another embodiment (embodiment in which a fiber layer is disposed in a simulated cornea) of a simulated sclera and a simulated eyeball of the present invention.
FIG. 9 shows a schematic view showing a step of making an incision in the sclera of an eyeball with a knife or a scalpel in glaucoma surgery.
FIG. 10 shows a schematic view showing a step of checking the sclera in glaucoma surgery.
FIG. 11 shows a schematic view showing a step of peeling and incision, that is, thinly cutting of the sclera of an eyeball in glaucoma surgery.
FIG. 12 shows a schematic view showing a step of pulling up the sclera of an eyeball in glaucoma surgery.
FIG. 13 shows a schematic view showing a step of the subsequent peeling and incision, that is, thinly cutting of the sclera of an eyeball in glaucoma surgery.
FIG. 14 shows a schematic view showing a step of suturing an incision site of the sclera of an eyeball in glaucoma surgery.

FIG. 15 shows a photograph of a state in which a simulated sclera for the surgery practice obtained in Example 26 is peeled and incised to be pulled up.

FIG. 16 shows a photograph of a state in which an incision site of a simulated sclera for the surgery practice obtained in Example 26 is sutured.

DESCRIPTION OF EMBODIMENTS

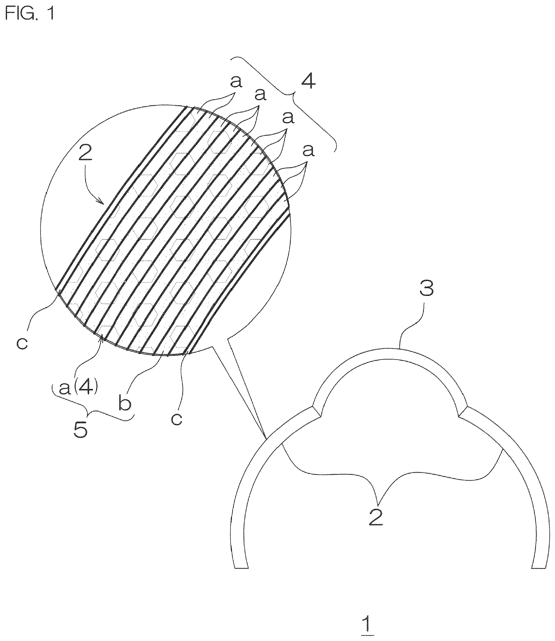

In FIG. 1, a simulated eyeball 1 is an artificial biomodel used for various applications to be described later (preferably, application of the eyeball surgery practice), and includes a simulated sclera 2 and a simulated cornea 3 formed continuously or discontinuously from the simulated sclera 2.

Examples of an embodiment in which the simulated sclera 2 and the simulated cornea 3 are formed continuously include an embodiment in which the simulated sclera 2 and the simulated cornea 3 are formed by collective molding of a single kind of resin, an embodiment in which the simulated cornea 3 is integrally molded with a metal mold having the once molded simulated sclera 2 set, and an embodiment in which the simulated sclera 2 is integrally molded with a metal mold having the once molded simulated cornea 3 set.

Further, an example of an embodiment in which the simulated sclera 2 and the simulated cornea 3 are formed discontinuously includes an embodiment in which the simulated sclera 2 and the simulated cornea 3 molded separately are bonded together with a known adhesive.

The simulated sclera 2 requires a sense of incision (incision properties) and a sense of thinly cutting (thinly cutting properties) close to the sclera of an actual human body.

The sense of incision is a sense when the incision is made in the (simulated) sclera with a knife or a scalpel.

And, the sense of thinly cutting is a sense at the time of the peeling and incision, that is, the thinly cutting of the (simulated) sclera from an incision part.

In addition, the simulated sclera 2 preferably has a sense of return (returnability) close to the sclera of an actual human body.

The sense of return is a state of returning when the (simulated) sclera is largely pulled after the thinly cutting.

In addition, the simulated sclera 2 preferably has a sense of tackiness (tackiness properties, surface stickiness) close to the sclera of an actual human body.

The sense of tackiness refers to the stickiness on the surface of the (simulated) sclera.

From these perspectives, the simulated sclera 2 is made up as follows.

In other words, the simulated sclera 2 is a membrane body forming a scleral part in the simulated eyeball 1, and includes a plurality of fiber layers (a) and a resin (b) in contact with the fiber layer (a).

A thickness of the simulated sclera 2 is, for example, 0.1 mm or more, preferably 0.3 mm or more, more preferably 0.5 mm or more, further more preferably 0.8 mm or more, and for example, 4.0 mm or less, preferably 2.0 mm or less, more preferably 1.5 mm or less, further more preferably 1.2 mm or less. The thickness of the simulated sclera 2 is particularly preferably 1.0 ±0.2 mm, furthermore, 1.0 ±0.1 mm.

That is, the simulated sclera 2 includes the plurality of fiber layers (a) so that the total thickness thereof is within the above-described range, and the resin (b) is in contact with each of the fiber layers (a).

The fiber layer (a) is a single layer made of fibers, and examples thereof include a woven fabric, a nonwoven fabric, a filter, and a mesh. They may be used alone or in combination of two or more.

As the fiber layer (a), from the viewpoint of improving a sense of incision, thinly cutting properties, and returnability, preferably, a woven fabric, a nonwoven fabric, and a mesh are used, more preferably, a nonwoven fabric is used. In other words, more preferably, the fiber layer (a) includes a nonwoven fabric, further more preferably, the fiber layer (a) consists of a nonwoven fabric.

In the fiber layer (a), the fiber is not particularly limited as long as it is a material which can be incised with a knife such as a scalpel, and examples thereof include polyester fibers, polyamide fibers (for example, nylon fibers and the like), polyvinyl alcohol fibers, polyolefin fibers (for example, polyethylene fibers, polypropylene fibers, and the like), polyurethane fibers, cellulose-based fibers, and wood fibers (for example, wood pulp and the like). They may be used alone or in combination of two or more.

As the fiber, preferably, polyester fibers, polyamide fibers, and polyolefin fibers are used, more preferably, polyolefin fibers are used, particularly preferably, polypropylene fibers are used.

The fibers can be obtained by spinning a resin by a known method.

A fiber diameter of the fiber constituting the fiber layer (a) is 0.6 $\mu$m or more, preferably 1.0 $\mu$m or more, more preferably 2.0 $\mu$m or more, and 170.0 $\mu$m or less, preferably 150.0 $\mu$m or less, more preferably 100 $\mu$m or less, further more preferably 50.0 $\mu$m or less, further more preferably 30.0 $\mu$m or less, particularly preferably 25.0 $\mu$m or less.

When the fiber diameter is within the above-described range, it is possible to obtain an excellent sense of incision, an excellent sense of thinly cutting, and excellent returnability.

The fiber diameter is not the fiber diameter (catalog value) of the fiber layer (a) before being molded as the simulated sclera 2, and is the fiber diameter of the fiber layer (a) included in the molded simulated sclera 2.

In other words, the fiber diameter of the fiber layer (a) is not determined from the fiber layer (a) prepared as a material, and is determined from the fiber layer (a) of the cross section of the simulated sclera 2 or the fiber layer (a) taken out from the simulated sclera 2.

Specifically, such a fiber diameter is measured and calculated as an average fiber diameter of 100 fibers by observation using a microscope in conformity with Examples to be described later.

In addition, a method of adjusting the fiber diameter to the above-described range is not particularly limited, and is appropriately set in accordance with the producing method of the fiber.

A method of obtaining the fiber layer (a) from the above-described fiber is not particularly limited, and a known producing method of a woven fabric and a known producing method of a nonwoven fabric can be used.

The nonwoven fabric includes, for example, a resin bond, a chemical bond, a needle punch, a thermal bond, a spunbond, and a melt blown in accordance with a producing method, and they may be used alone or in combination of two or more. As a producing method of a nonwoven fabric, from the viewpoint of improving a sense of incision of the simulated sclera 2, preferably, a spunbond is used.

A thickness (single layer thickness) of the fiber layer (a) is, for example, 0.01 mm or more, preferably 0.05 mm or more, more preferably 0.1 mm or more, and for example, 0.5 mm or less, preferably 0.4 mm or less, more preferably 0.3 mm or less.

A basis weight of the fiber layer (a) (basis weight of a single layer) is, for example, 5 $g/m^2$ or more, preferably 10 $g/m^2$ or more, and for example, 50 $g/m^2$ or less, preferably 30 $g/m^2$ or less.

The basis weight (basis weight of a single layer) is measured in conformity with JIS L1913 (2010).

These fiber layers (a) may be used alone or in combination of two or more.

The number (number of layers) of fiber layers (a) differs in accordance with the thickness (total thickness) of the simulated sclera 2, and the thickness and the basis weight of each of the fiber layers (a), and from the viewpoint of a sense of incision, a sense of thinly cutting, and returnability, it is 2 or more, preferably 3 or more, more preferably 4 or more, further more preferably 5 or more, and for example, 30 or less, preferably 20 or less, more preferably 10 or less.

The plurality of fiber layers (a) may be disposed in lamination so as to be in contact with each other at the inside of the simulated sclera 2, or may be also disposed separately with a predetermined interval so as not to be in contact with each other.

Preferably, the plurality of fiber layers (a) are disposed in lamination so as to be in contact with each other at the inside of the simulated sclera 2. Thus, a laminate (hereinafter, referred to as a fiber layer laminate) 4 in which the plurality of fiber layers (a) are disposed in lamination is obtained.

In the fiber layer laminate 4, if necessary, each of the fiber layers (a) in contact with each other may be bonded with each other by a known adhesive (such as glue) and the like.

The resin (b) is disposed in contact with the plurality of fiber layers (a).

The resin (b) is not particularly limited as long as it is a material which can be thinly cut with a knife such as a scalpel, and examples thereof include polymer materials such as polyvinylidene chloride, polyvinyl chloride, polyvinyl alcohol, polyethylene, polypropylene, polymethylpentene, polyethylene terephthalate, polyamide, cellophane, polyurethane, and silicone. Furthermore, an example of the resin (b) includes rubber. Examples of the rubber include silicone rubber (polydimethylsiloxane and the like), butadiene rubber, isoprene rubber, butyl rubber, fluorine rubber, ethylene propylene rubber, nitrile rubber, and natural rubber.

These resins (b) may be used alone or in combination of two or more.

As the resin (b), from the viewpoint of improving a sense of thinly cutting and returnability, preferably, a polyurethane and a silicone are used, more preferably, a polyurethane is used.

A form of the resin (b) is not particularly limited, and may be, for example, a solid state, a liquid state, or a semi-solid state. The resin (b) is preferably in a semi-solid state, more preferably in a gel state.

In the present invention, the gelled resin (b) is an ultra-low hardness elastomer. That is, the Asker F hardness of the resin (b) is relatively low and/or the Asker C hardness of the resin (b) is relatively low.

The Asker F hardness (in conformity with JIS K7312 (1996)) of the resin (b) is, for example, 40 or more, and for example, 100 or less.

Further, the Asker C hardness of the resin (b) (in conformity with JIS K7312 (1996)) is, for example, 0 or more, and for example, 40 or less.

When the Asker F hardness and/or the Asker C hardness of the resin (b) are/is within the above-described range, it is possible to obtain a sense of touch close to that of the sclera of the eyeball.

Also, from the viewpoint of a sense of thinly cutting and returnability of the simulated sclera 2, the Asker F hardness (in conformity with JIS K7312 (1996)) of the resin (b) is preferably 45 or more, more preferably 50 or more, further more preferably 60 or more, particularly preferably 70 or more, and preferably 95 or less, more preferably 90 or less, further more preferably 80 or less.

In addition, from the viewpoint of a sense of thinly cutting and returnability of the simulated sclera 2, the Asker C hardness (in conformity with JIS K7312 (1996)) of the resin (b) is preferably 3 or more, more preferably 5 or more, and preferably 35 or less, more preferably 30 or less, further more preferably 25 or less.

That is, when the Asker F hardness of the resin (b) is within the above-described range, or the Asker C hardness of the resin (b) is within the above-described range, it is possible to obtain the simulated sclera 2 having excellent returnability.

In addition, when the Asker F hardness of the resin (b) is within the above-described range, and the Asker C hardness of the resin (b) is within the above-described range, it is possible to obtain the simulated sclera 2 having particularly excellent returnability.

As such a gelled resin (b), preferably, a polyurethane gel and a silicone gel are used, more preferably, a polyurethane gel is used.

A method of obtaining the polyurethane gel is not particularly limited, and for example, first, a polyisocyanate component and a polyol component corresponding to desired properties are appropriately selected, and they are subjected to a urethanization reaction in a predetermined mold. That is, the polyurethane gel is a reaction product of the polyisocyanate component and the polyol component.

Examples of the polyisocyanate component include an aliphatic polyisocyanate, an aromatic polyisocyanate, and an araliphatic polyisocyanate. As the polyisocyanate component, preferably, an aliphatic polyisocyanate is used.

Examples of the aliphatic polyisocyanate include chain aliphatic diisocyanates such as hexamethylene diisocyanate (HDI) and pentamethylene diisocyanate (PDI); alicyclic diisocyanates such as isophorone diisocyanate (IPDI), norbornane diisocyanate (NBDI), hydrogenated xylylene diisocyanate ($H_6$XDI), and hydrogenated diphenylmethane diisocyanate ($H_{12}$MDI), and furthermore, derivatives of these. Examples of the derivative include an isocyanurate derivative (alcohol-free modified isocyanurate derivative, alcohol-modified isocyanurate derivative, and the like), a biuret derivative, an allophanate derivative, a carbodiimide derivative, and a polyol adduct.

These aliphatic polyisocyanates may be used alone or in combination of two or more.

As the aliphatic polyisocyanate, from the viewpoint of obtaining a polyurethane gel having excellent mechanical properties and excellent hardness, preferably, a chain aliphatic diisocyanate and a derivative thereof are used, more preferably, a hexamethylene diisocyanate (HDI) and/or a pentamethylene diisocyanate (PDI) and a derivatives thereof are used, further more preferably, a derivative of a hexamethylene diisocyanate (HDI) and/or a pentamethylene diisocyanate (PDI) is used, further more preferably, an isocyanurate derivative of a hexamethylene diisocyanate (HDI) and/or a pentamethylene diisocyanate (PDI) is used, particularly preferably, an alcohol-modified isocyanurate derivative of a hexamethylene diisocyanate (HDI) and/or a pentamethylene diisocyanate (PDI) is used.

In addition, of the hexamethylene diisocyanate (HDI) and the pentamethylene diisocyanate (PDI), from the viewpoint of improving transparency, preferably, a pentamethylene diisocyanate (PDI) is used.

An average number of isocyanate group of the polyisocyanate component is 2.3 or more, preferably 2.5 or more, more preferably 2.6 or more, further more preferably 2.7 or more, and 3.2 or less, preferably 3.1 or less, more preferably 3.0 or less, further more preferably 2.9 or less from the viewpoint of curability and mechanical properties.

Examples of the polyol component include a low molecular weight polyol having a molecular weight of below 400 and a high molecular weight polyol having a molecular weight of 400 or more.

From the viewpoint of obtaining a polyurethane gel having the above-described hardness, the polyol component preferably includes a high molecular weight polyol and more preferably includes only a high molecular weight polyol.

The high molecular weight polyol is an organic compound having two or more hydroxyl groups in a molecule and having a molecular weight (number average molecular weight in terms of polystyrene with GPC measurement) of 400 or more, preferably 500 or more, and for example 10000 or less, preferably 8000 or less, and examples thereof include polyether polyol, polyester polyol, polycarbonate polyol, polyurethane polyol, epoxy polyol, vegetable oil polyol, polyolefin polyol, acrylic polyol, and vinyl monomer-modified polyol. These high molecular weight polyols may be used alone or in combination of two or more.

As the high molecular weight polyol, from the viewpoint of flexibility of the polyurethane gel, preferably, a polyether polyol is used.

Examples of the polyether polyol include polyoxyalkylene polyols such as polyoxyethylene polyol, polyoxypropylene polyol, polyoxyethylene/ polyoxypropylene copolymer (random/ block), polyoxytrimethylene polyol, and polytetramethylene ether polyol (crystalline polytetramethylene ether polyol to be described later, amorphous polytetramethylene ether polyol to be described later, and the like). These polyether polyols may be used alone or in combination of two or more.

As the polyether polyol, from the viewpoint of a moist feeling, dimensional stability, mechanical properties, and hardness of the polyurethane gel, preferably, a polyoxypropylene polyol and a polytetramethylene ether polyol are used.

The polyoxypropylene polyol is, for example, an addition polymerization product of a propylene oxide using a low molecular weight polyol or a known low molecular weight polyamine as an initiator.

The low molecular weight polyol is, for example, a compound having 2 or more hydroxyl groups in a molecule and having a molecular weight of 50 or more and below 400, and examples thereof include dihydric alcohols such as ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 2,2,2-trimethylpentanediol, 3,3-dimethylolheptane, alkane (C7 to C20) diol, 1,3- or 1,4-cyclohexanedimethanol and a mixture thereof, 1,3- or 1,4-cyclohexanediol and a mixture thereof, hydrogenated bisphenol A, 1,4-dihydroxy-2-butene, 2,6-dimethyl-1-octene-3,8-diol, bisphenol A, diethylene glycol, triethylene glycol, and dipropylene glycol; trihydric alcohols such as glycerin, trimethylolpropane, and triisopropanolamine; and tetrahydric alcohols such as tetramethylolmethane (pentaerythritol) and diglycerin. These low molecular weight polyols may be used alone or in combination of two or more. As the low molecular weight polyol, preferably, a dihydric alcohol and a trihydric alcohol are used, more preferably, a dihydric alcohol is used.

The polyoxypropylene polyol is obtained as a polyoxypropylene polyol having an average functionality in accordance with the functionality of an initiator. For example, when an initiator having a functionality of 2 is used, a polyoxypropylene glycol having an average functionality of 2 is obtained, and when an initiator having a functionality of 3 is used, a polyoxypropylene triol having an average functionality of 3 is obtained.

These polyoxypropylene polyols may be used alone or in combination of two or more.

The polyoxypropylene polyol substantially does not include a polyoxyethylene unit. "Substantially" means that it does not include a polyoxyethylene unit except for a polyoxyethylene unit which is unavoidably incorporated. More specifically, the content of the polyoxyethylene unit is below 1% by mass with respect to the total amount of the polyoxypropylene polyol.

As the polyoxypropylene polyol, preferably, a polyoxypropylene polyol (polyoxypropylene glycol) having an average functionality of 2 is used.

An example of the polytetramethylene ether polyol includes a polytetramethylene ether glycol, and more specifically, examples thereof include a ring opening polymer (crystalline polytetramethylene ether glycol) obtained by cationic polymerization of tetrahydrofuran and an amorphous polytetramethylene ether glycol obtained by copolymerizing the above-described dihydric alcohol with a polymerization unit such as tetrahydrofuran. The crystallinity indicates solid at normal temperature (25°C), and the amarphousness indicates liquid at normal temperature (25°C).

The amorphous polytetramethylene ether glycol can be, for example, obtained as a copolymer (tetrahydrofuran/ alkyl substituted tetrahydrofuran (mole ratio)= 15/ 85 to 85/ 15) of a tetrahydrofuran and an alkyl substituted tetrahydrofuran (for example, 3-methyltetrahydrofuran and the like) and a copolymer (tetrahydrofuran/ branched glycol (mole ratio)= 15/ 85 to 85/ 15) of a tetrahydrofuran and a branched glycol (for example, neopentyl glycol and the like).

Further, as the amorphous polytetramethylene ether glycol, a commercially available product can be used, and examples of the commercially available product thereof include the "PTXG" series manufactured by ASAHI KASEI FIBERS CORPORATION and the "PTG-L" series manufactured by Hodogaya Chemical Co., Ltd.

Also, a plant-derived polytetramethylene ether glycol using a tetrahydrofuran produced based on a plant-derived raw material such as furfural as a starting material can be used.

As the polytetramethylene ether polyol, preferably, a polyoxypropylene glycol and an amorphous polytetramethylene ether glycol are used.

When a polyurethane gel is obtained, if necessary, the polyol component may also include the above-described low molecular weight polyol. A content ratio of the low molecular weight polyol is appropriately set as long as it does not damage the excellent effect of the present invention.

The polyol component preferably includes only the high molecular weight polyol, more preferably includes only the polyether polyol, further more preferably includes only the polyoxypropylene glycol or the amorphous polytetramethylene ether glycol.

An average functionality of the polyol component is usually 2.0 or more from the viewpoint of curability, and is, for example, 2.3 or less, preferably 2.2 or less, more preferably 2.1 or less from the viewpoint of mechanical properties. The average functionality of the polyol component is particularly preferably 2.0 from the viewpoint of a moist feeling and dimensional stability.

An average hydroxyl value (OH value) of the polyol component is, for example, 30 mgKOH/g or more, preferably 35 mgKOH/g or more, more preferably 37 mgKOH/g or more, further more preferably 40 mgKOH/g or more, and for example, 200 mgKOH/g or less, preferably 160 mgKOH/g or less, more preferably 150 mgKOH/g or less, further more preferably 130 mgKOH/g or less.

Further, a number average molecular weight of the polyol component is, for example, 400 or more, preferably 500 or more, more preferably 600 or more, and for example, 10000 or less, preferably 7000 or less, more preferably 5000 or less, further more preferably 3000 or less, particularly preferably 2000 or less.

Then, in order to obtain a polyurethane gel, a polyisocyanate component and a polyol component are preferably subjected to a urethanization reaction (solvent-free reaction, bulk polymerization) in the absence of a solvent.

In the urethanization reaction, for example, a known method such as a one-shot method and a prepolymer method is used, and preferably, a one-shot method is used. In the one-shot method, for example, after the polyisocyanate component and the polyol component are formulated (mixed) so that an equivalent ratio (NCO/ hydroxyl group) of an isocyanate group in the polyisocyanate component with respect to a hydroxyl group in the polyol component is, for example, 0.58 or more, preferably 0.60 or more, more preferably 0.62 or more, and for example, 1.2 or less, preferably 1.1 or less, more preferably 1.05 or less, further more preferably below 1.0, particularly preferably 0.95 or less, the obtained mixture is subjected to a curing reaction at, for example, room temperature to 120°C, preferably room temperature to 100°C for, for example, 5 minutes to 72 hours, preferably 2 to 10 hours. The curing temperature may be a constant temperature, or may be raised or cooled in stages.

In addition, in the above-described reaction, if necessary, known additives such as a urethanization catalyst (amines, organic metal compound, and the like), a plasticizer (ester-based plasticizer and the like), a storage stabilizer, an anti-blocking agent, a heat-resistant stabilizer, a light-resistant stabilizer, an ultraviolet absorber, an antioxidant, a defoaming agent, a mold release agent, a pigment, a dye, a lubricant, a filler, and a hydrolysis inhibitor can be blended at an appropriate timing. A mixing amount of the additive is appropriately set in accordance with the purpose and the application.

Thus, as the resin (b), a polyurethane gel can be obtained.

The arrangement of the resin (b) is not particularly limited as long as it is in contact with the fiber layer (a), and for example, the resin (b) may be laminated on the fiber layer (a), or the resin (b) may be impregnated into the fiber layer (a).

For example, by subjecting the above-described reaction to the surface of the fiber layer (a) to obtain the resin (b), the resin (b) can be laminated on the surface of the fiber layer (a). Further, separately from the fiber layer (a), a layer made of the resin (b) can be obtained by the above-described reaction, and the obtained resin (b) can be also laminated on the fiber layer (a).

Furthermore, by subjecting the above-described reaction to the inside of the fiber layer (a) to obtain the resin (b), it is possible to impregnate the fiber layer (a) with the resin (b). Preferably, the fiber layer (a) is impregnated with the resin (b).

Thus, the simulated sclera 2 including the plurality of fiber layers (a) and the resin (b) in contact with the fiber layer (a) is obtained.

In addition, the simulated sclera 2 may be provided with another layer in addition to the fiber layer (a) and the resin (b).

More specifically, the simulated sclera 2 may include, for example, a surface-coated layer (c) on its surface (one surface and/or the other surface). When the simulated sclera 2 includes the surface-coated layer (c), the stickiness on the surface can be suppressed.

The surface-coated layer (c) is not particularly limited, and an example thereof includes a resin layer. As in the case of the resin (b) described above, the resin for forming the resin layer is not particularly limited as long as it is a material which can be thinly cut with a knife such as a scalpel, and examples thereof include polymer materials such as polyvinylidene chloride, polyvinyl chloride, polyvinyl alcohol, polyethylene, polypropylene, polymethylpentene, polyethylene terephthalate, polyamide, cellophane, polyurethane, and silicone. Furthermore, an example of the resin includes rubber. Examples of the rubber include silicone rubber (polydimethylsiloxane and the like), butadiene rubber, isoprene rubber, butyl rubber, fluorine rubber, ethylene propylene rubber, nitrile rubber, and natural rubber.

These resins may be used alone or in combination of two or more.

As the resin, from the viewpoint of suppressing the stickiness on the surface, preferably, a polyurethane is used. That is, as the surface-coated layer (c), preferably, a polyurethane layer is used.

A forming method of the surface-coated layer (c) is not particularly limited, and a known method is used.

For example, a known coating agent is applied to the surface of a composite material (hereinafter, referred to as a resin-fiber composite material 5) including the fiber layer (a) and the resin (b) obtained as described above to be cured.

Thus, the surface-coated layer (c) is obtained.

The surface-coated layer (c) may be formed on one surface and/or the other surface of the resin-fiber composite material 5. Preferably, the surface-coated layer (c) is formed on one surface and the other surface (both surfaces) of the resin-fiber composite material 5.

In such a case, a thickness of the resin-fiber composite material 5 is, for example, 0.5 mm or more, preferably 0.8 mm or more, and for example, 1.5 mm or less, preferably 1.2 mm or less.

Further, a thickness of each of the surface-coated layers (c) is, for example, 5 $\mu$m or more, preferably 10 $\mu$m or more, and for example, 100 $\mu$m or less, preferably 50 $\mu$m or less.

Further, a ratio (thickness of the surface-coated layer (c)/ thickness of the resin-fiber composite material 5) of the thickness of the surface-coated layer (c) to the thickness of the resin-fiber composite material 5 is, for example, 0.005 or more, preferably 0.01 or more, and for example, 0.1 or less, preferably 0.05 or less.

Then, the thickness of the simulated sclera 2 is the total thickness of the thickness of the resin-fiber composite material 5, and the thickness of the surface-coated layer (c) to be formed if necessary, and as described above, it is, for example, 0.5 mm or more, preferably 0.8 mm or more, and for example, 1.5 mm or less, preferably 1.2 mm or less. The thickness of the simulated sclera 2 is particularly preferably 1.0$\pm$ 0.2 mm, furthermore 1.0$\pm$ 0.1 mm.

The simulated cornea 3 is a membrane body forming a corneal part in the simulated eyeball 1, is made of, for example, the same resin as that of the resin (b) in the simulated sclera 2 described above, and is integrally formed with respect to the simulated sclera 2.

The simulated cornea 3 is not limited to the description above, and may be, for example, formed of a resin different from the resin (b) of the simulated sclera 2. Further, the simulated cornea 3 may be formed as a separate body from the simulated sclera 2 and may be bonded to the simulated sclera 2 by an adhesive and the like.

A thickness of the simulated cornea 3 is generally the same as that of the simulated sclera 2, and is, for example, 0.5 mm or more, preferably 0.8 mm or more, and for example, 1.5 mm or less, preferably 1.2 mm or less.

Then, the simulated sclera 2 described above includes the plurality of fiber layers (a) and the resin (b) in contact with the fiber layer (a). Therefore, only a portion of the plurality of fiber layers (a) can be pulled to obtain a sense of thinly cutting close to the sclera of an actual eyeball.

The above-described simulated sclera 2 has a fiber diameter of a fiber constituting the fiber layer (a) of 0.6 $\mu$m or more and 170.0 $\mu$m or less. Therefore, it is possible to obtain a sense of incision close to the sclera of the actual eyeball. In addition, the above-described simulated eyeball 1 includes the above-described simulated sclera 2, so that it has an excellent sense of incision and an excellent sense of thinly cutting.

More specifically, in the simulated sclera 2, the peel strength between the plurality of fiber layers (a) is, for example, 0.15 N/cm or more, preferably 0.20 N/cm or more, more preferably 0.50 N/cm or more, further more preferably 0.80 N/cm or more, and for example, 10.00 N/cm or less, preferably 8.00 N/cm or less, more preferably 5.00 N/cm or less.

When the peel strength between the fiber layers (a) is within the above-described range, a sense of incision, a sense of thinly cutting, and the returnability are excellent. Therefore, the simulated sclera 2 and the simulated eyeball 1 described above can be preferably used for various applications to be described later, above all, in the practice of eyeball surgery such as glaucoma surgery and the like.

The peel strength between the fiber layers (a) can be measured in conformity with JIS K6854-2 (1999).

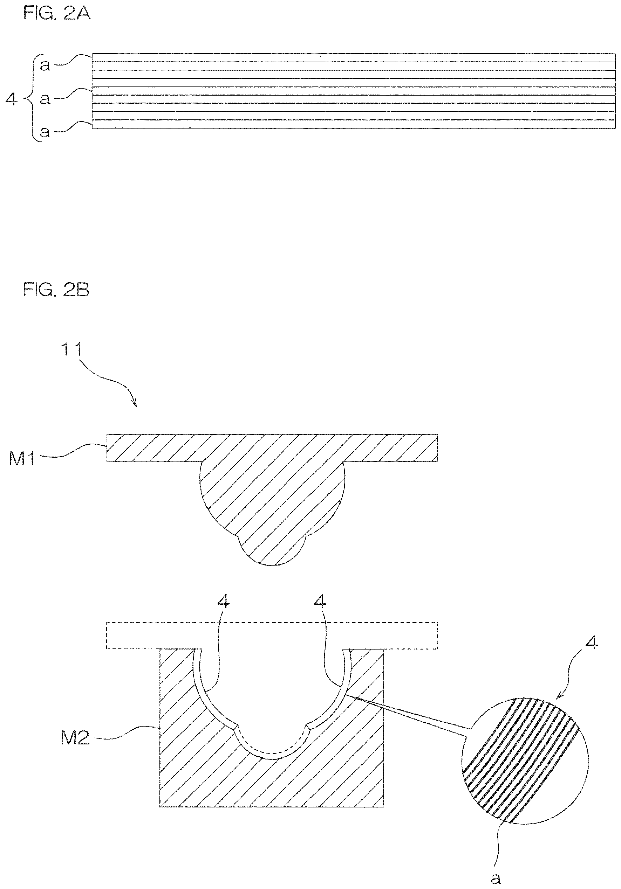

In the following, a method for producing the simulated eyeball 1 and the simulated sclera 2 is described in detail with reference to FIG. 2.

In this method, first, as shown in FIG. 2A, the plurality of fiber layers (a) are laminated (lamination step).

A method of laminating the fiber layer (a) is not particularly limited, and a known method is used.

As described above, the number of fiber layers (a) is 2 or more, preferably 3 or more, more preferably 4 or more, further more preferably 5 or more, and for example, 30 or less, preferably 20 or less, more preferably 10 or less.

Further, if necessary, it is also possible to bond between the laminated fiber layers (a) using a known adhesive (such as glue).

Thus, the fiber layer laminate 4 is obtained as a laminate of the plurality of fiber layers (a).

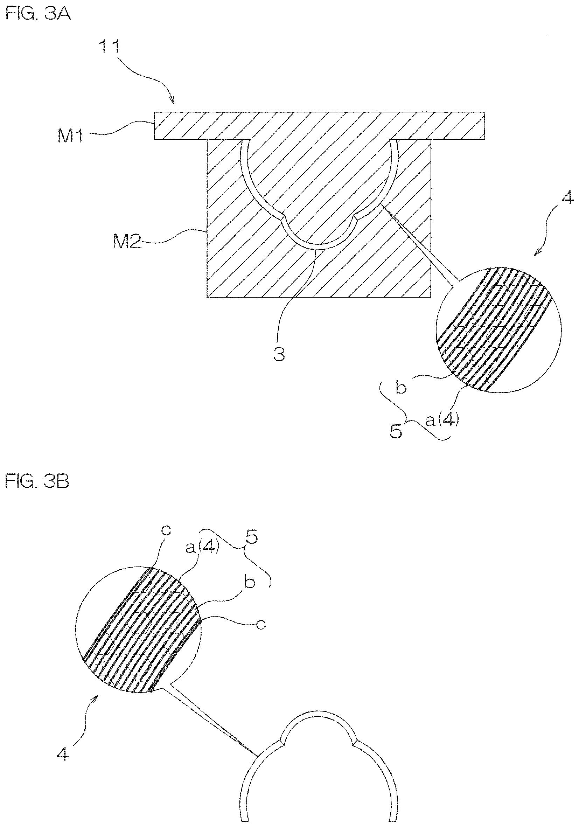

Next, in this method, as shown in FIGS. 2B and 3A, the laminated fiber layer (a) is impregnated with the resin (b) (impregnation step).

More specifically, first, as shown in FIG. 2B, a mold 11 for formation of the simulated eyeball is prepared.

The mold 11 is a mold formed in accordance with the shape of the simulated sclera 2 and the simulated cornea 3. The mold 11 specifically includes a protruding mold M1 and a recessed mold M2, and enables the simulated sclera 2 and the simulated cornea 3 to be formed in a gap between the protruding mold M1 and the recessed mold M2.

In this step, the fiber layer laminate 4 obtained as described above is disposed in a gap between the protruding mold M1 and the recessed mold M2. For example, the fiber layer laminate 4 is placed on the surface of the recessed portion of the recessed mold M2, and the protruding mold M1 is inserted from above (ref: a broken line of FIG. 2B).

On the other hand, the above-described polyisocyanate component and the above-described polyol component are prepared, and they are mixed to obtain a raw material mixture.

The above-described raw material mixture is then poured into a gap between the protruding mold M1 and the recessed mold M2. Thus, before the reaction of the raw material mixture, the raw material mixture is impregnated into each fiber layer (a) of the fiber layer laminate 4. Thereafter, the raw material mixture impregnated into each fiber layer (a) is subjected to a urethanization reaction under the above-described conditions.

Thus, as shown in FIG. 3A, a polyurethane gel impregnated into each fiber layer (a) is obtained as the resin (b) impregnated into each fiber layer (a).

In other words, the resin-fiber composite material 5 including the fiber layer laminate 4 and the polyurethane gel (the resin (b)) impregnated into each fiber layer (a) is obtained.

In addition, in this step, in a portion where the fiber layer laminate 4 is not disposed, the above-described raw material composition is cured without being impregnated into the fiber layer (a), and the simulated cornea 3 is formed.

Thereafter, if necessary, as shown in FIG. 3B, the mold 11 is removed, and, if necessary, the above-described known coating agent is applied to the surface (preferably, both surfaces) of the resin-fiber composite material 5 to be dried and cured.

Thus, the surface-coated layer (c) is formed on the surface of the resin-fiber composite material 5.

Thus, it is possible to obtain the simulated sclera 2 including the plurality of fiber layers (a) and the resin (b) in contact with the fiber layer (a), and if necessary, including the surface-coated layer (c).

Also, along with this, it is possible to obtain the simulated eyeball 1 including the simulated sclera 2 and the simulated cornea 3.

Then, according to the above-described method for producing the simulated sclera 2, it is possible to obtain the simulated sclera having an excellent sense of incision and an excellent sense of thinly cutting.

Therefore, the simulated sclera 2 obtained by the above-described method for producing the simulated sclera 2 and the simulated eyeball 1 including the simulated sclera 2 can be preferably used for various applications to be described later, above all, in the practice of eyeball surgery such as glaucoma surgery.

In the description described above, the plurality of (preferably 5 to 10) fiber layers (a) are laminated to form the fiber layer laminate 4. However, the number of fiber layers (a) is not particularly limited as long as it is two or more. For example, the two fiber layers (a) can be also laminated to form the fiber layer laminate 4.

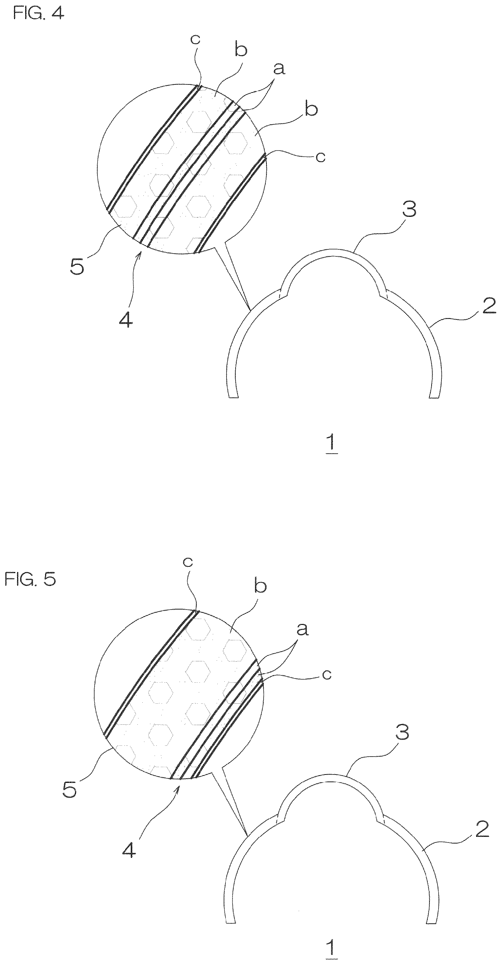

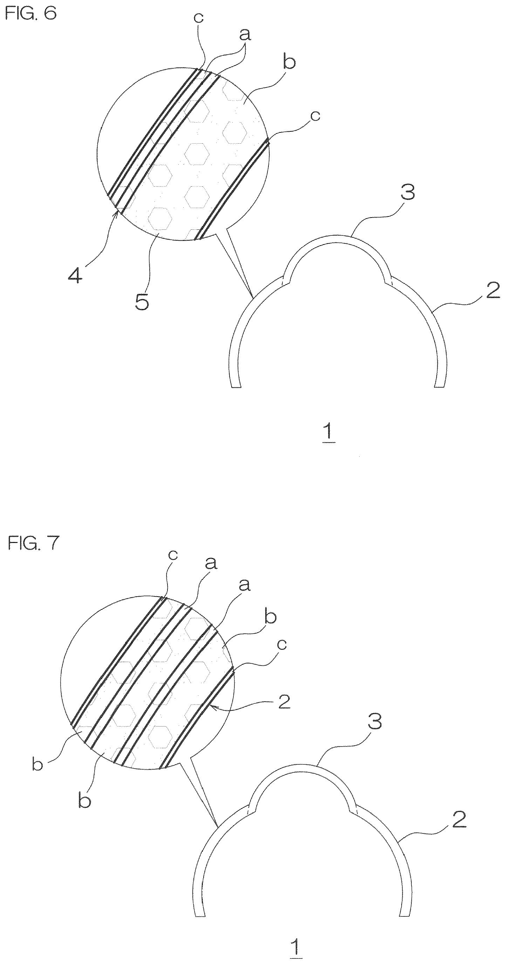

In such a case, for example, the fiber layer laminate 4 consisting of the two fiber layers (a) may be disposed in a generally middle portion in a thickness direction of the simulated sclera 2 as shown in FIG. 4, may be disposed at one side in the thickness direction of the simulated sclera 2 (inside the eyeball) as shown in FIG. 5, or may be disposed at the other side in the thickness direction of the simulated sclera 2 (outside the eyeball) as shown in FIG. 6.

In addition, the simulated sclera 2 may include the plurality of fiber layers (a) which are not laminated. Specifically, as shown in FIG. 7, the plurality of fiber layers (a) may be disposed in the resin (b) at predetermined intervals from each other. In that case, each fiber layer (a) may be disposed in a generally middle portion in the thickness direction of the simulated sclera 2, may be disposed at one side in the thickness direction of the simulated sclera 2 (inside the eyeball), or may be disposed at the other side in the thickness direction of the simulated sclera 2 (outside the eyeball).

In addition, in the above-described description, the fiber layer (a) is disposed in the simulated sclera 2 and is not disposed in the simulated cornea 3. However, the fiber layer (a) may be disposed at least in the simulated sclera 2. That is, for example, the fiber layer (a) may be also disposed in both the simulated sclera 2 and the simulated cornea 3.

In such a case, the fiber layer (a) may be, for example, disposed at one side in the thickness direction of the simulated sclera 2 and the simulated cornea 3 (inside the eyeball (ref: FIG. 5)), or may be disposed at the other side in the thickness direction of the simulated sclera 2 and the simulated cornea 3 (outside the eyeball (ref: FIG. 6)).

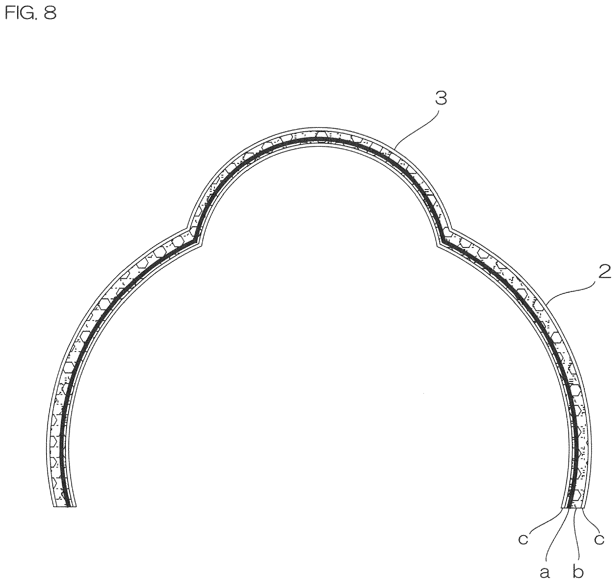

Preferably, as shown by a thick line of FIG. 8, the fiber layer (a) is disposed at one side in the thickness direction of the simulated sclera 2 and the simulated cornea 3 (inside the eyeball).

In addition, in the above-described description, the simulated sclera 2 is produced as a portion of the simulated eyeball 1. Alternatively, for example, only the simulated sclera 2 may be also produced. In such a case, the shape of the simulated sclera 2 is not limited to the shape of the simulated eyeball 1 described above, and may be, for example, a flat plate shape and the like.

Then, the simulated sclera 2 and the simulated eyeball 1 described above can be used for various applications.

An example of the application of the simulated sclera 2 and the simulated eyeball 1 includes an examination and a practice application of ophthalmic medical behavior and ophthalmic medical practice as shown below.

(1) Eyeball Surgery Practice

An example of the application of the simulated sclera 2 and the simulated eyeball 1 described above includes an eyeball surgery practice application. In other words, the simulated sclera 2 and the simulated eyeball 1 described above can provide efficient and effective improvement in surgical technique skills, increase the number of physicians with high skills, and provide safety and reassurance to society.

More specifically, the simulated sclera 2 and the simulated eyeball 1 described above can be, for example, used for the acquisition of early-stage surgical techniques for residents, junior doctors, and the like.

Also, the simulated sclera 2 and the simulated eyeball 1 described above can be, for example, used for the mastery of the surgical techniques by repeating the practices and for the re-mastery of the surgical techniques acquired in the past.

Also, the simulated sclera 2 and the simulated eyeball 1 described above can be, for example, used for patient-matched preoperative training (patient model) or in the acquisition of surgical techniques for special symptoms (special lesion model).

(2) Quantitative Measurement and Evaluation of Surgical Techniques

Examples of the application of the simulated sclera 2 and the simulated eyeball 1 described above include quantitative measurement and an evaluation application of surgical techniques. By using the simulated sclera 2 and the simulated eyeball 1 described above in such an application, the surgical techniques, which have relied on conventional physicians' sensitivity, can be quantitatively converted into numerical values and widely shared to be applied.

More specifically, for example, the surgical techniques can be quantified by combining the simulated sclera 2 and the simulated eyeball 1 described above with a known sensor and the like.

Then, the obtained data can be used to make big data and formulate proficiency by machine learning. Also, the simulated sclera 2 and the simulated eyeball 1 described above can be, for example, used for the practice with a skilled surgeon's surgical techniques as an exemplar, and recognition of mastery with a skilled surgeon's proficiency as a reference.

In addition, the obtained data can be also used for programs in the operation of surgical robots.

(3) Examination of Improvement and Practice of Surgical and Treatment Methods

Examples of the application of the simulated sclera 2 and the simulated eyeball 1 described above include an improved examination application of surgical methods, an improved examination application of surgical techniques, an improved examination application of treatment methods, and their practice application.

More specifically, the simulated sclera 2 and the simulated eyeball 1 described above can be used to examine the improvement of a failure regarding the current surgical methods, surgical techniques, treatment methods (non-surgical treatment methods), and the like.

Also, the simulated sclera 2 and the simulated eyeball 1 described above can be used in the practice to master improved surgical methods, surgical techniques, treatment methods (non-surgical treatment methods), and the like.

4) Examination of Improvement and Usage Practice of Instrument and Device Used in Surgery and Treatment

Examples of the application of the simulated sclera 2 and the simulated eyeball 1 described above include an examination application of improvement of instruments and devices used for surgery and treatment, and a usage practice application of improved products.

More specifically, the simulated sclera 2 and the simulated eyeball 1 described above can be, for example, used to examine the improvement of a failure and the like regarding the current instruments and devices used for surgery, treatment, and the like of the eyeball.

In addition, the simulated sclera 2 and the simulated eyeball 1 described above can be used in the practice for mastering a method of using the improved instruments and devices.

(5) Development and Practice of New Surgical Method, New Surgical Techniques, and New Treatment Method

Examples of the application of the simulated sclera 2 and the simulated eyeball 1 described above include a developmental application of new surgical methods, new surgical techniques, and new treatment methods, and a practice application of the new methods.

More specifically, the simulated sclera 2 and the simulated eyeball 1 described above can be, for example, used for the examination for developing new surgical methods, new surgical techniques, and new treatment methods.

Also, the simulated sclera 2 and the simulated eyeball 1 described above can be, for example, used in the practice for mastering new surgical methods, new surgical techniques, and new treatment methods.

(6) Development and Usage Practice of New Instrument, New Device, and the like Used in Surgery and Treatment

Examples of the application of the simulated sclera 2 and the simulated eyeball 1 described above include a developmental application of new instruments and new devices used in surgical methods and treatment methods, and a usage practice application of developed products.

More specifically, the simulated sclera 2 and the simulated eyeball 1 described above can be, for example, used to develop new surgical methods of the eyeball, and new instruments and new devices used in new treatment of the eyeball. The simulated sclera 2 and the simulated eyeball 1 described above can be also used to develop the improved surgical methods of the eyeball, and new instruments and new devices used for the improved treatment of the eyeball. In addition, the simulated sclera 2 and the simulated eyeball 1 described above can be used to develop the current surgical methods of the eyeball, and new instruments and new devices used in the current treatment of the eyeball.

Also, the simulated sclera 2 and the simulated eyeball 1 described above can be used in the practice for mastering usage methods of the new instruments, the new devices, and the like.

In these various applications, the usage of the simulated sclera 2 and the simulated eyeball 1 described above can clear ethical problems such as not using human eyes. In addition, the improvement of conventional techniques and the development of new technologies can be efficiently and effectively examined, and the improved techniques and the new technologies can be practiced.

(7) Usage in Medial System

An example the application of the simulated sclera 2 and the simulated eyeball 1 described above includes an application for the medical system. The usage of the simulated sclera 2 and the simulated eyeball 1 described above in such an application can clear ethical problems such as not using human eyes, and furthermore, can also efficiently and effectively foster medical personnel, so that they can be used in various medical systems.

More specifically, the simulated sclera 2 and the simulated eyeball 1 described above can be, for example, used as a standard simulator to aid in the development of a new medical system, and can be, for example, used as a test simulator in a certified physician system, a medical specialist system, and the like.

(8) Development, Improvement, and Usage Practice of Medical Robot and Medical Support Robot

Examples of the application of the simulated sclera 2 and the simulated eyeball 1 described above include a developmental application of medical robots (particularly, surgical robots) and medical support robots (particularly, surgical support robots), and a practice application for their operation mastering.

In other words, the examination of development and improvement of the medical robots and the medical support robots, which are expected to carry out advanced medical procedures difficult for humans and medical procedures by tele-manipulation, can be efficiently and effectively carried out by using the simulated sclera 2 and the simulated eyeball 1 described above in a way that clears ethical issues, and furthermore, the simulated sclera 2 and the simulated eyeball 1 described above can be used in the practice for mastering the manipulation of improved products and the like.

(9) Usage in Team Medicine

An example of the application of the simulated sclera 2 and the simulated eyeball 1 described above includes the usage in team medicine.

More specifically, the surgical site is organized as a team because it requires support from assistants and nurses, and the operation is carried out smoothly and rapidly. Thus, by building a system for practicing as a team in advance, it is possible for people who participate in the team to carry out organizational actions early and effectively. In this regard, the simulated sclera 2 and the simulated eyeball 1 described above can be used in the simulated practice of cooperative worker's behavior and cropping at the time of surgery, a prior examination of cooperative work before surgery, and the like.

Further, in addition to the examination and the practice application described above of the ophthalmic medical behavior and the ophthalmic medical practice, the simulated sclera 2 and the simulated eyeball 1 described above can be used in various fields in which a simulated human body model is required (for example, a human body model for display and the like).

Since the simulated sclera 2 and the simulated eyeball 1 have an excellent sense of incision and an excellent sense of thinly cutting, they are preferably used in the examination and the practice application described above of the ophthalmic medical behavior and the ophthalmic medical practice.

The simulated sclera 2 and the simulated eyeball 1 are more preferably used in the eyeball surgery practice application and, particularly preferably used in the practice of glaucoma surgery of the eyeball.

In the practice of glaucoma surgery of the eyeball using the simulated eyeball 1, a known surgical method is used, and specifically, for example, trabeculotomy and the like is used.

The trabeculotomy is an operative method which tries the reconstruction of the physiological aqueous outflow tract by improving the inflow of the aqueous humor from the anterior chamber to the Schlemm canal by incising the paraschlemm canal endothelial network tissue in which the aqueous outflow resistance is expected to be large.

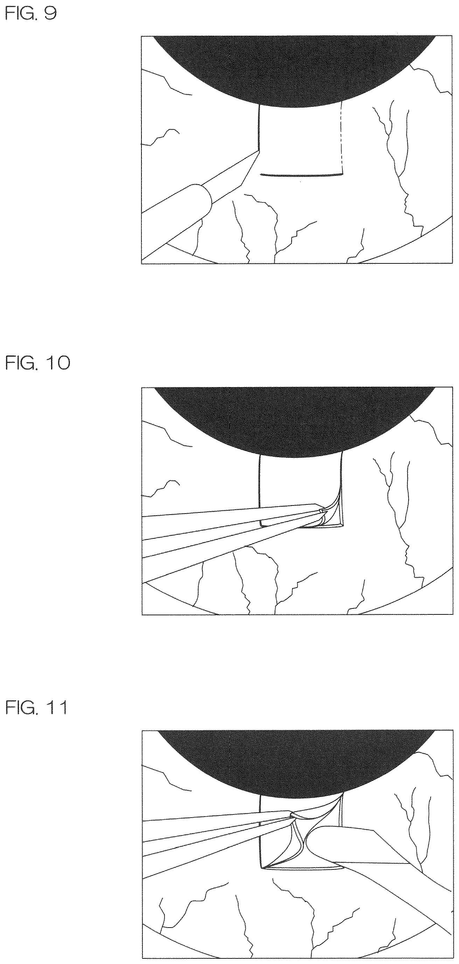

More specifically, in this method, first, as shown in FIG. 9, the sclera (the simulated sclera 2 in FIG. 1) of the eyeball (the simulated eyeball 1 in FIG. 1) is cut into a generally U-shape with a knife or a scalpel. At this time, as one of the more specific processes, the sclera is first incised in a circumferential direction of the eyeball (lateral direction on the plane of the sheet), then, incised in a radial direction of the eyeball (longitudinal direction on the plane of the sheet) so as to be connected to one end of the incision in the circumferential direction, and then, as shown by a phantom line of FIG. 9, incised in the radial direction of the eyeball (longitudinal direction on the plane of the sheet) so as to be connected to the other end of the incision in the circumferential direction.

Next, in this method, as shown in FIG. 10, the thickness of the sclera (the simulated sclera 2 in FIG. 1) is checked, while an incision corner of the sclera (the simulated sclera 2 in FIG. 1) of the eyeball (the simulated eyeball 1 in FIG. 1) is grabbed and pulled in a corneal direction.

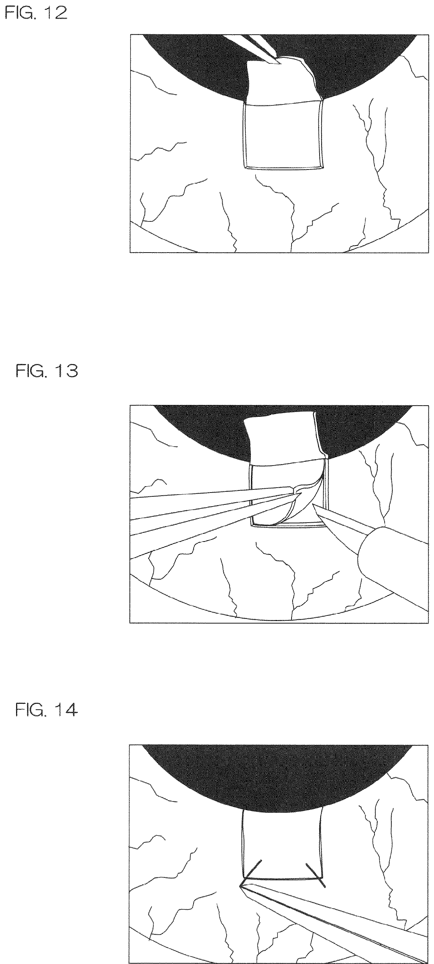

Then, as shown in FIG. 11, by pulling the sclera (the simulated sclera 2 in FIG. 1) in the corneal direction, the fibers of the sclera (the fiber layer (a) of the simulated sclera 2 in FIG. 1) are stretched, and the peeling and incision, that is, thinly cutting is carried out so as to remove the site, while the incision depth is kept. Then, as shown in FIG. 12, the peeled part is pulled up to confirm that the peeling and incision, that is, the thinly cutting reaches the boundary between the cornea (the simulated cornea 3 in FIG. 1) and the sclera.

Next, as shown in FIG. 13, a portion of the incision part is grabbed and pulled in the corneal direction to further stretch the fibers of the sclera (the fiber layer (a) of the simulated sclera 2 in FIG. 1) to advance the peeling and incision, that is, the thinly cutting so as to remove the site. Then, though not shown, it is confirmed that it reaches the Schlemm's canal, and the trabecular body is incised. Thereafter, as shown in FIG. 14, the incision site of the sclera (the simulated sclera 2 in FIG. 1) is sutured.

The glaucoma surgery by such a method requires the practice of the incision, and the peeling and incision (thinly cutting) of the sclera.

In this regard, since the simulated sclera 2 and the simulated eyeball 1 described above have an excellent sense of incision and an excellent sense of thinly cutting, the incision, and the peeling and incision (thinly cutting) of the sclera described above can be practiced with a sense close to the eyeball of the human body (FIGS. 9 to 11 and 13).

In addition, the simulated sclera 2 and the simulated eyeball 1 described above can also improve a sense of return, so that it is possible to practice the pulling up of the sclera described above (FIG. 12) with a sense close to the eyeball of the human body.

That is, the simulated sclera 2 and the simulated eyeball 1 described above can be used to practice glaucoma surgery of the eyeball with a sense close to the eyeball of the human body. Examples

Next, the present invention is described based on Production Examples, Examples, and Comparative Examples. The present invention is however not limited by the following Examples. All designations of "part" or "parts" and "%" mean part or parts by mass and % by mass, respectively, unless otherwise particularly specified. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

Each of the measurement methods used in Production Examples, Examples, and Comparative Examples is described below.

1. Measurement Method

<Measurement Method of Average Fiber Diameter of Fiber Layer before Molding of Simulated Sclera>

A fiber layer prepared as a material was observed using a microscope VHX-D510 manufactured by KEYENCE CORPORATION, and a fiber diameter was measured. An average value measured by 100 fibers was defined as the fiber diameter of the fiber layer before molding (that is, a pre-molding material).

<Measurement Method of Basis Weight of Fiber Layer>

A basis weight of the fiber layer was measured in conformity with JIS L1913 (2010).

<Measurement Method of Thickness of Fiber Layer>

A thickness of the fiber layer was measured under the conditions of a load of 100 gf/cm$^2$ in conformity with JIS L1913 (2010).

<Isocyanate Group Concentration (Unit: % by mass), Conversion Rate of Isocyanate Group (Unit: % by mass)>

By using a potentiometric titrator (manufactured by KYOTO ELECTRONICS MANUFACTURING CO., LTD., model number: AT-510), the isocyanate group concentration (isocyanate group content ratio) was measured by a toluene/ dibutylamine hydrochloric acid method in conformity with JIS K-1603-1 (2007), and a conversion rate of an isocyanate group of a measurement sample was calculated by the following formula.

Conversion rate of isocyanate group= 100- (isocyanate group concentration of reaction liquid mixture after completion of reaction/ isocyanate group concentration of reaction liquid before reaction× 100)

<Isocyanate Monomer Concentration (Unit: % by mass)>

The concentration of an unreacted isocyanate monomer (pentamethylene diisocyanate monomer or hexamethylene diisocyanate monomer) was calculated by using a pentamethylene diisocyanate produced in the same manner as in Example 1 in the specification of International Publication WO2012/121291 or a commercially available hexamethylene diisocyanate as a reference material, being labelled with a dibenzylamine, and using a calibration curve prepared from an area value of chromatogram obtained under the following HPLC measurement conditions.

Device: Prominence (manufactured by Shimadzu Corporation)
Pumping: LC-20 AT
Degasser: DGU-20A3
Autosampler: SIL-20 A
Column thermostat: COT-20 A
Detector: SPD-20 A
Column: SHISEIDO SILICA SG-120
Column temperature: 40°C
Eluent: n-hexane/ methanol/ 1,2-dichloroethane= 90/5/5 (volume ratio)
Flow rate: 0.2 mL/min
Detecting method: UV 225 nm

<Viscosity (unit: mPa·s)>

The viscosity of a measurement sample was measured at 25°C in conformity with a cone plate viscometer method of JIS K5600-2-3 (2014) by using an E-type viscometer TV-30 (rotor angle: 1°34', rotor radius: 24 cm) manufactured by TOKI SANGYO CO., LTD. The number of revolutions of the cone plate at the time of measurement was sequentially changed between 100 rpm and 2.5 rpm as the viscosity increased.

<Mole Ratio of Allophanate Group to Isocyanurate Group by $^1$H-NMR>

The $^1$H-NMR measurement was carried out with the following device and conditions, and a content ratio (mole ratio of allophanate group/ isocyanurate group) of the allophanate group to 1 mole of the isocyanurate group in the aliphatic polyisocyanate was calculated by the following formula. As a reference of chemical shift ppm, a tetramethylsilane (0 ppm) in a $D^6$-DMSO solvent was used.

Device: JNM-AL400 (manufactured by JEOL Ltd.)
Conditions: measurement frequency: 400 MHz, solvent: $D^6$-DMSO, solute concentration: 5% by mass
Assigned peak (6 H) of proton of isocyanurate group (methylene group ($CH_2$ group) directly bonded to isocyanurate group): 3.8 ppm
Assigned peak (1 H) of proton of allophanate group (NH group in allophanate group): 8.3 to 8.7 ppm
Allophanate group/ isocyanurate group (mole ratio)= integral value of assigned peak of proton of allophanate group/ (integral value of assigned peak of proton of isocyanurate group/ 6)

<Average Number of Isocyanate Group (Average Functionality)>

An average number of the isocyanate group of the aliphatic polyisocyanate was calculated from the isocyanate group concentration, the solid content concentration (NV), and a number average molecular weight of gel permeation chromatography measured by the following device and conditions according to the following formula.

$$\text{Average number of isocyanate group} = A/B \times C/42.02$$

(wherein A represents the isocyanate group concentration, B represents the solid content concentration, and C represents a number average molecular weight)
Device: HLC-8220GPC (manufactured by TOSOH CORPORATION)
Column: TSKgelG1000HXL, TSKgelG2000HXL and TSKgelG3000HXL connected in series (manufactured by TOSOH CORPORATION)
Detector: refractive index detector
Measurement conditions
Injection volume: 100 μL
Eluent: tetrahydrofuran
Flow rate: 0.8 mL/min

Temperature: 40°C

Calibration curve: standard polyethylene oxide in a range of 106 to 22450 (manufactured by TOSOH CORPORATION, trade name: TSK standard polyethylene oxide)

<Average Number of Hydroxyl Group (Average Functionality)>

A hydroxyl value was defined as the number of mg of potassium hydroxide corresponding to a hydroxyl group in 1 g of a polyoxyalkylene polyol. The hydroxyl value of the polyol was measured in conformity with the "hydroxyl value" of Section 6.4 of JIS K1557 (2007).

2. Raw Material

(1) Fiber Layer (A)

The fiber layers shown below were prepared.

Fiber Layer (a-1)... A nonwoven fabric having an average fiber diameter (pre-molding material) of 15.0 $\mu$m, a basis weight of 15 g/m$^2$, and a thickness of 0.18 mm obtained by thermal embossing of a spunbond method using a polypropylene resin was referred to as a fiber layer (a-1).

Fiber Layer (a-2)... A nonwoven fabric having an average fiber diameter (pre-molding material) of 20.0 $\mu$m, a basis weight of 20 g/m$^2$, and a thickness of 0.21 mm obtained by thermal embossing of a spunbond method using a polypropylene resin was referred to as a fiber layer (a-2).

Fiber Layer (a-3)... A nonwoven fabric having an average fiber diameter (pre-molding material) of 0.46 $\mu$m, a basis weight of 15 g/m$^2$, and a thickness of 0.16 mm obtained by calendering of a melt blown method using a polypropylene resin was referred to as a fiber layer (a-3).

Fiber Layer (a-4)... A nonwoven fabric having an average fiber diameter (pre-molding material) of 0.60 $\mu$m, a basis weight of 15 g/m$^2$, and a thickness of 0.16 mm obtained by calendering of a melt blown method using a polypropylene resin was referred to as a fiber layer (a-4).

Fiber Layer (a-5)... A nonwoven fabric having an average fiber diameter (pre-molding material) of 0.90 $\mu$m, a basis weight of 15 g/m$^2$, and a thickness of 0.16 mm obtained by calendering of a melt blown method using a polypropylene resin was referred to as a fiber layer (a-5).

Fiber Layer (a-6)... A nonwoven fabric having an average fiber diameter (pre-molding material) of 20.1 $\mu$m, a basis weight of 16 g/m$^2$, and a thickness of 0.18 mm obtained by thermal embossing of a spunbond method using a polypropylene resin was referred to as a fiber layer (a-6).

Fiber Layer (a-7)... A nonwoven fabric having an average fiber diameter (pre-molding material) of 20.3 $\mu$m, a basis weight of 30 g/m$^2$, and a thickness of 0.28 mm obtained by thermal embossing of a spunbond method using a polypropylene resin was referred to as a fiber layer (a-7).

Fiber Layer (a-8)... A nonwoven fabric having an average fiber diameter (pre-molding material) of 33.0 $\mu$m, a basis weight of 15 g/m$^2$, and a thickness of 0.20 mm obtained by thermal embossing of a spunbond method using a polypropylene resin was referred to as a fiber layer (a-8).

Fiber Layer (a-9)... A nonwoven fabric having an average fiber diameter (pre-molding material) of 34.9 $\mu$m, a basis weight of 100 g/m$^2$, and a thickness of 1.40 mm obtained by a single-layer needle punching process of a spunbond method using a polypropylene resin was referred to as a fiber layer (a-9).

Fiber Layer (a-10)... Manufactured by Clever Co., Ltd., trade name: polypropylene mesh wire diameter of 100 $\mu$m, thickness of 0.195 mm

A basis weight of the fiber layer (a-10) was 28.8 g/m$^2$.

Fiber Layer (a-11)... Manufactured by Clever Co., Ltd., trade name: polypropylene mesh wire diameter of 150 $\mu$m, thickness of 0.315 mm

A basis weight of the fiber layer (a-11) was 49.0 g/m$^2$.

Fiber Layer (a-12)... Manufactured by Clever Co., Ltd., trade name: polypropylene mesh wire diameter of 200 $\mu$m, thickness of 0.350 mm

A basis weight of the fiber layer (a-12) was 67.0 g/m$^2$.

Fiber Layer (a-13)... Standard adjacent fabrics nylon for staining of colour fastness test in conformity with JIS L 0803, purchased from the Japanese Standards Association Webdesk

The fiber layer (a-13) had an average fiber diameter (pre-molding material) of 19.3 $\mu$m, a basis weight of 29.1 g/m$^2$, and a thickness of 0.106 mm.

Fiber Layer (a-14)... Standard adjacent fabrics fiber layer (a-14) for staining of colour fastness test in conformity with JIS L 0803 had an average fiber diameter (pre-molding material) of 14.8 $\mu$m, a basis weight of 32.1 g/m$^2$, and

a thickness of 0.086 mm.

Fiber Layer (a-15)... A nonwoven fabric having an average fiber diameter (pre-molding material) of 3.0 $\mu$m, a basis weight of 15 g/m$^2$, and a thickness of 0.30 mm obtained by calendering of a melt blown method using a polypropylene resin was referred to as a fiber layer (a-15).

(2) Resin Layer (B)

(2-1) Aliphatic Polyisocyanate (b-1)

Preparation Example 1 (Isocyanate (b-1-1) (Alcohol-Modified Isocyanurate Derivative of PDI))

A four-neck flask equipped with a thermometer, a stirring device, a reflux tube, and a nitrogen introducing tube was charged with 500 parts by mass of pentamethylene diisocyanate produced in the same manner as in Example 1 in the specification of International Publication WO2012/121291 (hereinafter, referred to as PDI), 6.9 parts by mass of isobutyl alcohol, 0.3 parts by mass of 2,6-di(tert-butyl)-4-methylphenol, and 0.3 parts by mass of tris(tridecyl) phosphite to be reacted at 80°C for 2 hours.

Then, 0.05 parts by mass of N-(2-hydroxypropyl)-N,N,N-trimethylammonium-2-ethylhexanoate was blended as an isocyanuration catalyst. The isocyanate group concentration was measured, and the reaction was continued until its concentration reached 48.3% by mass (that is, conversion rate of 10% by mass). When a predetermined conversion rate (conversion rate of 10% by mass) was reached after 20 minutes, 0.12 parts by mass of o-toluenesulfonamide was added thereto. The obtained reaction liquid mixture was passed through a thin film distillation device (temperature: 150°C, vacuum degree: 0.093 kPa) to remove an unreacted pentamethylene diisocyanate monomer, and further, 0.02 parts by mass of o-toluenesulfonamide and 0.003 parts by mass of benzoyl chloride were added to 100 parts by mass of the obtained residue to obtain an alcohol-modified isocyanurate derivative of PDI. This was referred to as an isocyanate (b-1-1).

In the isocyanate (b-1-1), an average number of the isocyanate group was 2.8, the isocyanate monomer concentration was 0.4% by mass, the isocyanate group concentration was 23.4% by mass, and the viscosity at 25°C was 950 mPa·s.

Further, a mole ratio of the allophanate group to the isocyanurate group by $^1$H-NMR measurement was an allophanate group/ isocyanurate group = 33.0/ 100.

Preparation Example 2 (Isocyanate (b-1-2) (Alcohol-Modified Isocyanurate Derivative of HDI))

An alcohol-modified isocyanurate derivative of HDI was obtained in the same manner as in Preparation Example 1, except that PDI was changed to a hexamethylene diisocyanate (manufactured by Mitsui Chemicals, Inc., trade name: Takenate 700 (hereinafter, referred to as HDI)). This was referred to as an isocyanate (b-1-2).

In the isocyanate (b-1-2), an average number of the isocyanate group was 2.9, the isocyanate monomer concentration was 0.5% by mass, the isocyanate group concentration was 22.1% by mass, and the viscosity at 25°C was 840 mPa·s.

Further, a mole ratio of the allophanate group to the isocyanurate group by $^1$H-NMR measurement was an allophanate group/ isocyanurate group = 34.3/ 100.

(2-2) Polyol (b-2)

Preparation Example 1 (Polyol (b-2-1))

A polyoxyalkylene polyol (polyether polyol obtained by subjecting propylene glycol to addition polymerization of propylene oxide, number average molecular weight (Mn)= 3000, average functionality of 2, hydroxyl value of 37 mgKOH/g, and ethylene oxide concentration in the total oxyalkylene= 0% by mass) was referred to as a polyol (b-2-1).

The polyol (b-2-1) was a polyoxypropylene glycol (PPG).

Preparation Example 2 (Polyol (b-2-2))

A polyoxyalkylene polyol (polyether polyol obtained by subjecting propylene glycol to addition polymerization of propylene oxide, number average molecular weight (Mn)= 2000, average functionality of 2, hydroxyl value of 56 mgKOH/g, and ethylene oxide concentration in the total oxyalkylene= 0% by mass) was referred to as a polyol (b-2-2).

The polyol (b-2-2) was a polyoxypropylene glycol (PPG).

Preparation Example 3 (Polyol (b-2-3))

A polyoxyalkylene polyol (polyether polyol obtained by subjecting propylene glycol to addition polymerization of propylene oxide, number average molecular weight (Mn)= 1000, average functionality of 2, hydroxyl value of 112 mgKOH/g, and ethylene oxide concentration in the total oxyalkylene= 0% by mass) was referred to as a polyol (b-2-3).
The polyol (b-2-3) was a polyoxypropylene glycol (PPG).

Preparation Example 4 (Polyol (b-2-4))

A polyoxyalkylene polyol (polyether polyol obtained by subjecting propylene glycol to addition polymerization of propylene oxide, number average molecular weight (Mn)= 700, average functionality of 2, hydroxyl value of 240 mgKOH/g, and ethylene oxide concentration in the total oxyalkylene= 0% by mass) was referred to as a polyol (b-2-4).
The polyol (b-2-4) was a polyoxypropylene glycol (PPG).

Preparation Example 5 (Polyol (b-2-5))

The polyol (b-2-1) having a number average molecular weight of 3000 and the polyol (b-2-2) having a number average molecular weight of 2000 were mixed so as to have 80: 20 (b-2-1: b-2-2 (mass ratio)), and as a mixture, a polyol (b-2-5) was obtained.
The polyol (b-2-5) had a number average molecular weight of about 2130, an average functionality of 2, a hydroxyl value of 53 mgKOH/g, and the ethylene oxide concentration in the total oxyalkylene of 0% by mass.
The polyol (b-2-5) was a polyoxypropylene glycol (PPG).

Preparation Example 6 (Polyol (b-2-6))

The polyol (b-2-2) having a number average molecular weight of 2000 and the polyol (b-2-3) having a number average molecular weight of 1000 were mixed so as to have 75: 25 (b-2-2: b-2-3 (mass ratio)), and as a mixture, a polyol (b-2-6) was obtained.
The polyol (b-2-6) had a number average molecular weight of about 1600, an average functionality of 2, a hydroxyl value of 70 mgKOH/g, and the ethylene oxide concentration in the total oxyalkylene of 0% by mass.
The polyol (b-2-6) was a polyoxypropylene glycol (PPG).

Preparation Example 7 (Polyol (b-2-7))

Amorphous polytetramethylene ether glycol having a number average molecular weight of 1800 (manufactured by ASAHI KASEI FIBERS CORPORATION, trade name: PTXG, hydroxyl value of 60 mgKOH/g, average functionality of 2, copolymer of tetrahydrofuran and neopentyl glycol)

(3) Plasticizer (b-3)

Diisononylcyclohexane-1,2-dicarboxylate (manufactured by BASF SE, trade name: Hexamol DINCH)

(4) Catalyst (b-4)

Manufactured by TOKYO CHEMICAL INDUSTRY CO., LTD., reagent, dibutyltin dilaurate (urethanization catalyst)

(5) Defoaming Agent (b-5)

Manufactured by BYK Japan KK, trade name: BYK-088

(6) Silicone Resin (b-6)

(b-6-1) main agent, manufactured by Dow Corning Toray Co., Ltd., trade name: Silicone MG7-9800A
(b-6-2) curing agent, manufactured by Dow Corning Toray Co., Ltd., trade name: Silicone MG7-9800B

(7) Coating Agent (C)

(c-1) main agent: manufactured by FUJI TORYO CO., LTD., trade name: Mold Coat Z UN-750 (polyol component)

(c-2) curing agent: manufactured by FUJI TORYO CO., LTD., trade name: UB-1300 (polyisocyanate component: hexamethylene diisocyanate derivative)

(c-3) diluent: manufactured by FUJI TORYO CO., LTD., trade name: Mystel Thinner TM-5510 (petroleum organic solvent)

3. Method for Producing Resin for Hardness Measurement

Reference Example 1

In the mass ratio shown in Table 1, the isocyanate (b-1-1) and the polyol (b-2-4) were prepared.

Then, 100 parts by mass of the polyol (b-2-4) adjusted at 25°C, 15.58 parts by mass of the polyisocyanate (a-1) (equivalent ratio of isocyanate group to hydroxyl group (NCO/ hydroxyl group= 0.70)), 0.1 parts by weight of the dibutyltin dilaulate (b-4) of the catalyst, and 0.2 parts by weight of the defoaming agent (b-5) were put into a plastic container, and the mixture was stirred and mixed for 30 seconds under stirring at 800 rpm by using a three-one motor (manufactured by SHINTO Scientific Co., Ltd., trade name: HEIDOM FBL3000).

Thereafter, the liquid mixture was immediately defoamed under a reduced pressure, and after removing the foam of the liquid mixture, it was poured into a square block metal mold having a size of 5 cm × 15 mm which was coated with Teflon (registered trademark) in advance and heated at 80°C by taking care not to enter the bubbles. Then, the liquid mixture was allowed to react at 80°C for one hour to obtain a polyurethane gel.

This polyurethane gel was left to stand in a room at 23°C with relative humidity of 55% for one day and then, the hardness thereof was measured.

Reference Examples 2 to 26 and Reference Comparative Examples 1 to 4

A resin layer for hardness measurement was obtained in the same manner as in Reference Example 1, except that the formulation was changed to those shown in Tables 1 to 3.

4. Production of Simulated Sclera (Flat Plate Shape)

Example 1

In the mass ratio shown in Table 1, the isocyanate (b-1-1) and the polyol (b-2-4) were prepared.

Then, 100 parts by mass of the polyol (b-2-4) adjusted at 25°C, 15.58 parts by mass of the polyisocyanate (b-1-1) (equivalent ratio of isocyanate group to hydroxyl group (NCO/ hydroxyl group= 0.70)), 0.1 parts by weight of the dibutyltin dilaurate of the catalyst (b-4), and 0.2 parts by weight of the defoaming agent (b-5) were put into a plastic container, and the mixture was stirred and mixed for 30 seconds under stirring at 800 rpm by using a three-one motor (manufactured by SHINTO Scientific Co., Ltd., trade name: HEIDOM FBL3000).

Thereafter, the liquid mixture was immediately defoamed under a reduced pressure, and the foam of the liquid mixture was removed.

On the other hand, the number of fiber layers shown in Table 1 was laminated to obtain a fiber layer laminate.

Thereafter, the fiber layer laminate was disposed in a sheet metal mold having a thickness of 1 mm which was coated with Teflon (registered trademark) in advance and heated at 80°C.

Then, the above-described liquid mixture was poured into the sheet metal mold by taking care not to enter the bubbles. Then, the liquid mixture was allowed to react at 80°C for one hour to obtain a resin-fiber composite material (flat plate shape) having a thickness of 1.0 mm.

Then, the main agent (c-1) adjusted at 25°C, the curing agent (c-2), and the diluent (c-3) were mixed at the mass ratio shown in Table 1 to obtain a coating agent.

Thereafter, the coating agent was applied to both surfaces of the resin-fiber composite material (flat plate shape) by spray, and then, dried at 80°C for one hour to form a surface-coated layer.

Thus, a simulated sclera (flat plate shape) was obtained.

The simulated sclera (flat plate shape) was left to stand in a room at 23°C with relative humidity of 55% for one day and then, subjected to various property measurements and surgical evaluation by an ophthalmologist.

Examples 2 to 22, and 24 to 25, and Comparative Examples 1 to 4 A simulated sclera for the surgical practice was obtained in the same manner as in Example 1, except that the formulation was changed to those shown in Tables 1 to 3.

5. Production of Simulated Sclera (Eyeball Shape)

Example 23

Each layer of the number of fibers shown in Table 2 was sprayed with spray glue (manufactured by 3M Japan Limited., trade name: spray glue 55) and laminated to obtain a fiber layer laminate. The obtained fiber layer laminate was then heated at 80°C for one hour in an eyeball-shaped metal mold having a thickness of 1.0 mm and molded into an eyeball shape.

Then, of the fiber layer laminates, a portion corresponding to the cornea was punched out with a punch, so that only a portion corresponding to the sclera was shaped.

Then, in the mass ratio shown in Table 2, the isocyanate (b-1-1) and the polyol (b-2-4) were prepared.

Then, 100 parts by mass of the polyol (b-2-4) adjusted at 25°C, 15.68 parts by mass of the polyisocyanate (b-a-1) (equivalent ratio of isocyanate group to hydroxyl group (NCO/ hydroxyl group= 0.70)), 0.5 parts by weight of the dibutyltin dilaulate (b-4) of the catalyst, and 0.2 parts by weight of the defoaming agent (b-5) were put into a plastic container, and the mixture was stirred and mixed for 30 seconds under stirring at 800 rpm by using a three-one motor (manufactured by SHINTO Scientific Co., Ltd., trade name: HEIDOM FBL3000).

Thereafter, the liquid mixture was immediately defoamed under a reduced pressure, and the foam of the liquid mixture was removed.

Then, the above-described fiber layer laminate was disposed in a simulated eyeball-shaped metal mold having a thickness of 1.0 mm, heated at 80°C in advance, and treated with a release agent (manufactured by NEOS COMPANY LIMITED, Freelease 310).

Then, the above-described liquid mixture was poured into a simulated eyeball-shaped metal mold by taking care not to enter the bubbles. Then, the liquid mixture was allowed to react at 80°C for two hours to obtain a resin-fiber composite material (eyeball shape) having a thickness of 1.0 mm.

Then, the main agent (c-1) adjusted at 25°C, the curing agent (c-2), and the diluent (c-3) were mixed at the mass ratio shown in Table 2 to obtain a coating agent.

Thereafter, the coating agent was applied to both surfaces of the resin-fiber composite material (eyeball shape) by spray, and then, dried at 80°C for one hour to form a surface-coated layer.

Thus, a simulated sclera (eyeball shape) was obtained.

The simulated sclera (eyeball shape) was left to stand in a room at 23°C with relative humidity of 55% for one day and then, subjected to various property measurements and surgical evaluation by an ophthalmologist.

Example 26

A simulated sclera for the surgical practice (eyeball shape) was obtained in the same manner as in Example 23, except that the formulation was changed to that shown in Table 3.

5. Evaluation

The polyurethane gel and the simulated sclera were evaluated by the following procedure. The results are shown in Tables 3 to 4.

<Measurement Method of Average Fiber Diameter of Fiber Layer after Molding of Simulated Sclera>

The fiber layer was taken out from the simulated sclera (flat plate shape and eyeball shape), the fiber layer was observed using a microscope VHX-D510 manufactured by KEYENCE CORPORATION, and the fiber diameter was measured. An average value of 100 fibers was referred to as the fiber diameter of the fiber layer (after molding) in the simulated sclera.

<Peel Strength of Simulated Sclera>

A flat plate-shaped simulated sclera was cut into a piece having a width of 5 mm and a length of 50 mm to be used as a test piece. The second or the first layer of the fiber layer interface was peeled by 20 mm in advance, and the peel strength was measured by using a tensile compression testing machine (manufactured by INTESCO co., ltd., Model 205N) in conformity with JIS K6854-2 (1999).

And, the eyeball-shaped simulated sclera was cut into a piece having a width of 5 mm and a length of 10 mm to be used as a test piece. The second layer of the fiber layer interface was peeled by 3 mm in advance. Then, a simulated sclera having a width of 5 mm and a length of 50 mm was bonded to the surface side of the peeled portion with a cyano-acrylate adhesive (manufactured by Konishi Co., Ltd., trade name: Aron Alpha) to extend a portion grabbed by the chuck of the tensile testing machine, and the peel strength was measured in conformity with JIS K6854-2 (1999).

<Asker C Hardness of Polyurethane Gel>

The Asker C hardness of each of the polyurethane gels obtained in Reference Examples and Reference Comparative Examples was measured by a Type C hardness test of JIS K7312 (1996).

<Asker F Hardness of Polyurethane Gel>

The Asker F hardness of each of the polyurethane gels obtained in Reference Examples and Reference Comparative Examples was measured by the same method as the Type C hardness test of JIS K7312 (1996).

<Incision Properties of Simulated Sclera>

A simulated sclera (flat plate shape and eyeball shape) was used to carry out glaucoma surgery by an ophthalmologist. The sense of inserting the incision with a scalpel into the simulated sclera was evaluated and classified into the following four grades.

1: There is an appropriate sense of resistance to perceive fibers during cutting with a scalpel similar to that during cutting through the collagen fibers of the actual sclera. The sense is similar to that during cutting through the actual sclera.
2: There is a sense of resistance to perceive fibers during cutting with a scalpel similar to that during cutting through the collagen fibers of the actual sclera. However, the resistance is weak or strong, which is similar to that of the actual sclera but slightly different from the actual sclera.
3: There is a sense of resistance to perceive fibers during cutting with a scalpel similar to that during cutting through the collagen fibers of the actual sclera. However, the resistance is weak or strong, which is similar to that of the actual sclera but not the same as that of the actual sclera.
4: There is no sense of resistance to perceive fibers during cutting with a scalpel or an extremely strong sense of resistance, which is quite different from that of the actual sclera.

<Thinly Cutting Properties of Simulated Sclera>

The simulated sclera (flat plate shape and eyeball shape) was used to carry out glaucoma surgery by an ophthalmologist. The sense of thinly cutting the simulated sclera with a scalpel was evaluated and classified into the following five grades.

1: As the peeling progresses, the peeling expands when the scalpel is gently pressed while the flap is pinched with a tweezer, which is the same sense as when the actual sclera is thinly cut.
2: As the peeling progresses, the peeling expands when the scalpel is gently pressed while the flap is pinched with a tweezer, but the peeling expands even when the force of pressing is weak, which is similar sense to the actual sclera, but slightly different from the actual sclera.
3: As the peeling progresses, the peeling expands when the scalpel is gently pressed while the flap is pinched with a tweezer, and the peeling expands when the pinched tweezer is strongly stretched, which is similar sense to the actual sclera but with a different sense.
4: As the peeling progresses, the peeling easily expands by simply pinching the flap with a tweezer, which is quite different from the actual sclera.
5: It was impossible to peel the simulated sclera in a layer state, which is quite different from the actual sclera.

<Returnability of Simulated Sclera>

The simulated sclera (flat plate shape and eyeball shape) was used to carry out glaucoma surgery by an ophthalmologist. The flaps created by thinly cutting the simulated sclera with a scalpel were peeled by 90° or more to evaluate the subsequent return, and the results were classified into the following four grades.

1: After peeling the flap by 90° or more, it retains a pulled state with slight deformation in the return direction, which is the same state as the flap of the actual sclera.

2: After peeling the flap by 90° or more, the force of return of the flap is too weak to be partially attached to the sclera, or is too strong, so that it cannot retain the pulled state, which is similar to the actual sclera, but slightly different from the actual sclera.

3: After peeling the flap by 90° or more, the force of return of the flap is weak to be attached half to the sclera, or is too strong, so that the flap is gradually returned to its original state, which is similar to the actual sclera, but different from the actual sclera.

4: After peeling the flap by 90° or more, the force of return of the flap is extremely weak and is attached very strongly to the sclera, or is extremely strong to return to its original state as soon as the pinched tweezer is released, which is quite different from the actual sclera.

<Stickiness (Tuckiness) of Simulated Sclera >

The simulated sclera (flat plate shape and eyeball shape) was used to carry out glaucoma surgery by an ophthalmologist. The sense at the time of touching the surface of the simulated sclera was classified into the following three grades.

1. There is no stickiness on the surface, and there is no discomfort with handling of the actual sclera.

2. There is stickiness on the surface, which is similar to the actual sclera, but different from the actual sclera.

3. The stickiness on the surface is too strong and sticks to the touch, which is quite different from the actual sclera.

<Surgical Practice Evaluation>

The simulated sclera for the surgical practice (eyeball shape) obtained in Examples 23 and 26 was subjected to the practice of trabeculotomy.

More specifically, first, an incision was made in the obtained simulated sclera for the surgical practice (ref: FIG. 9), and then, the thickness of the simulated sclera was checked, while an incision corner was grabbed and pulled in the corneal direction (ref: FIG. 10). Next, the sclera was peeled and incised, that is, thinly cut, so as to remove the sclera, while pulled in the corneal direction (ref: FIG. 11). Then, the peeled part was pulled up to confirm that the peeling and incision, that is, the thinly cutting reached at the boundary between the cornea and the sclera (ref: FIG. 12). Thereafter, a portion of the incision part was grabbed and pulled in the corneal direction, and the peeling and incision, that is, the thinly cutting was advanced so as to remove the fibers of the sclera (ref: FIG. 13).

In the above-described practice, the sense close to the eyeball of the human body was obtained in each simulated sclera for the surgical practice obtained in Examples 23 and 26.

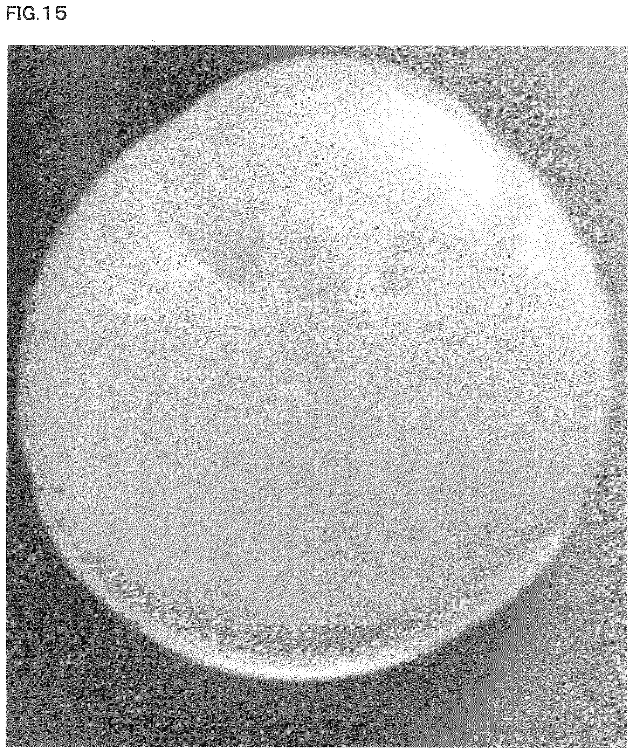

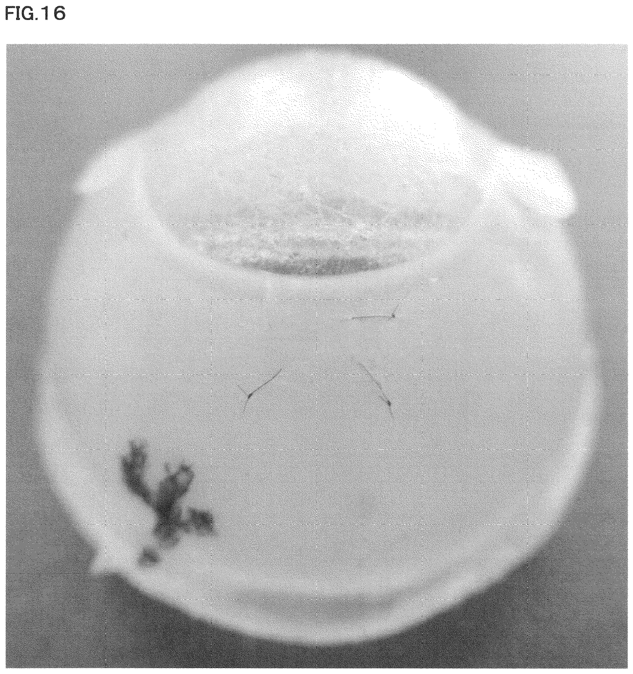

A photograph of a step (corresponding to FIG. 13) in which the simulated sclera for the surgical practice obtained in Example 26 was peeled and incised to be pulled up is shown in FIG. 15. Also, thereafter, a photograph of a step (corresponding to FIG. 14) of suturing the incision site of the simulated sclera for the surgical practice is shown in FIG. 16.

[FIG. 1]

Table 1

| No. | | Ex. 1 | Ex. 2 | Ex. 3 | Comparative Ex. 1 | Ex. 4 | Ex. 5 | Ex. 6 | Ex. 7 | Ex. 8 | Ex. 9 | Ex. 10 | Comparative Ex. 2 | Comparative Ex. 3 | Comparative Ex. 4 |
|---|---|---|---|---|---|---|---|---|---|---|---|---|---|---|---|
| Fiber Layer (a) | a-1 | 10 | - | 10 | - | - | - | - | - | - | - | - | - | - | 1 |
| | a-2 | - | 5 | - | - | - | - | - | - | - | - | - | - | - | - |
| | a-3 | - | - | - | 5 | - | - | - | - | - | - | - | - | - | - |
| | a-4 | - | - | - | - | 5 | - | - | - | - | - | - | - | - | - |
| | a-5 | - | - | - | - | - | 5 | - | - | - | - | - | - | - | - |
| | a-6 | - | - | - | - | - | - | 5 | - | - | - | - | - | - | - |
| | a-7 | - | - | - | - | - | - | - | 5 | - | - | - | - | - | - |
| | a-8 | - | - | - | - | - | - | - | - | 5 | - | - | - | - | - |
| | a-9 | - | - | - | - | - | - | - | - | - | - | - | - | 1 | - |
| | a-10 | - | - | - | - | - | - | - | - | - | 4 | - | - | - | - |
| | a-11 | - | - | - | - | - | - | - | - | - | - | 3 | - | - | - |
| | a-12 | - | - | - | - | - | - | - | - | - | - | - | 2 | - | - |
| | a-13 | - | - | - | - | - | - | - | - | - | - | - | - | - | - |
| | a-14 | - | - | - | - | - | - | - | - | - | - | - | - | - | - |
| | a-15 | - | - | - | - | - | - | - | - | - | - | - | - | - | - |
| | Fiber Type | Nonwoven Fabric | Nonwoven Fabric | Nonwoven Fabric | Nonwoven Fabric | Nonwoven Fabric | Nonwoven Fabric | Nonwoven Fabric | Nonwoven Fabric | Nonwoven Fabric | Filter | Filter | Filter | Nonwoven Fabric | Nonwoven Fabric |
| Aliphatic Isocyanate (b-1) | b-1-1 (PDI) | 15.68 | 35.85 | 11.91 | 35.85 | 35.85 | 35.85 | 35.85 | 35.85 | 35.85 | 35.85 | 35.85 | 35.85 | 35.85 | 35.85 |
| | b-1-2 (HDI) | - | - | - | - | - | - | - | - | - | - | - | - | - | - |

EP 3 859 715 A1

| No. | | | Ex. 1 | Ex. 2 | Ex. 3 | Comparative Ex. 1 | Ex. 4 | Ex. 5 | Ex. 6 | Ex. 7 | Ex. 8 | Ex. 9 | Ex. 10 | Comparative Ex. 2 | Comparative Ex. 3 | Comparative Ex. 4 |
|---|---|---|---|---|---|---|---|---|---|---|---|---|---|---|---|---|
| Resin (b) | Polyol (b-2) | b-2-1 (PPG, Mn3000) | - | - | - | - | - | - | - | - | - | - | - | - | - | - |
| | | b-2-2 (PPG, Mn2000) | - | - | - | - | - | - | - | - | - | - | - | - | - | - |
| | | b-2-3 (PPG, Mn1000) | - | - | - | - | - | - | - | - | - | - | - | - | - | - |
| | | b-2-4 (PPG, Mn700) | - | 100 | - | 100 | 100 | 100 | 100 | 100 | 100 | 100 | 100 | 100 | 100 | 100 |
| | | b-2-5 (PPG, Mn2130) | - | - | - | - | - | - | - | - | - | - | - | - | - | - |
| | | b-2-6 (PPG, Mn1600) | 100 | - | - | - | - | - | - | - | - | - | - | - | - | - |
| | | b-2-7 (Amorphous PTMEG) | - | - | 100 | - | - | - | - | - | - | - | - | - | - | - |
| | Plasticizer (b-3) | | 0 | 0 | 0 | 0 | 0 | 0 | 0 | 0 | 0 | 0 | 0 | 0 | 0 | 0 |
| | Catalyst (b-4) | | 0.1 | 0.1 | 0.01 | 0.1 | 0.1 | 0.1 | 0.1 | 0.1 | 0.1 | 0.1 | 0.1 | 0.1 | 0.1 | 0.1 |
| | Defoaming Agent (b-5) | | 0.2 | 0.2 | 0.2 | 0.2 | 0.2 | 0.2 | 0.2 | 0.2 | 0.2 | 0.2 | 0.2 | 0.2 | 0.2 | 0.2 |

EP 3 859 715 A1

| No. | | | Ex. 1 | Ex. 2 | Ex. 3 | Comparative Ex. 1 | Ex. 4 | Ex. 5 | Ex. 6 | Ex. 7 | Ex. 8 | Ex. 9 | Ex. 10 | Compara-tive Ex. 2 | Compara-tive Ex. 3 | Compara-tive Ex. 4 |
|---|---|---|---|---|---|---|---|---|---|---|---|---|---|---|---|---|
| | Silicone Resin (b-6) | Main Agent (b-6-1) | - | - | - | - | - | - | - | - | - | - | - | - | - | - |
| | | Curing Agent (b-6-2) | - | - | - | - | - | - | - | - | - | - | - | - | - | - |
| | Equivalent Ratio [NCO]/[OH] | | 0.70 | 0.70 | 0.62 | 0.70 | 0.70 | 0.70 | 0.70 | 0.70 | 0.70 | 0.70 | 0.70 | 0.70 | 0.70 | 0.70 |
| | Resin Type | | Urethane | Urethane | Urethane | Urethane | Urethane | Urethane | Urethane | Urethane | Urethane | Ure-thane | Ure-thane | Urethane | Urethane | Urethane |
| Coat-ed Layer (c) | Main Agent (c-1) | | 20 | 20 | 20 | 20 | 20 | 20 | 20 | 20 | 20 | 20 | 20 | 20 | 20 | 20 |
| | Curing Agent (c-2) | | 12 | 12 | 12 | 12 | 12 | 12 | 12 | 12 | 12 | 12 | 12 | 12 | 12 | 12 |
| | Diluent (c-2) | | 30 | 30 | 30 | 30 | 30 | 30 | 30 | 30 | 30 | 30 | 30 | 30 | 30 | 30 |

[FIG. 2]

Table 2

| No. | | Ex. 11 | Ex. 12 | Ex. 13 | Ex. 14 | Ex. 15 | Ex. 16 | **Ex. 17** | Ex. 18 | Ex. 19 | Ex. 20 | Ex. 21 | Ex. 22 | Ex. 23 |
|---|---|---|---|---|---|---|---|---|---|---|---|---|---|---|
| **Fiber Layer (a)** | a-1 | - | - | - | - | - | - | - | - | - | - | - | - | 10 |
| | a-2 | 5 | 5 | 5 | 5 | 5 | 5 | 5 | - | - | 5 | 5 | - | - |
| | a-3 | - | - | - | - | - | - | - | - | - | - | - | - | - |
| | a-4 | - | - | - | - | - | - | - | - | - | - | - | - | - |
| | a-5 | - | - | - | - | - | - | - | - | - | - | - | - | - |
| | a-6 | - | - | - | - | - | - | - | - | - | - | - | - | - |
| | a-7 | - | - | - | - | - | - | - | - | - | - | - | 5 | - |
| | a-8 | - | - | - | - | - | - | - | - | - | - | - | - | - |
| | a-9 | - | - | - | - | - | - | - | - | - | - | - | - | - |
| | a-10 | - | - | - | - | - | - | - | - | - | - | - | - | - |
| | a-11 | - | - | - | - | - | - | - | - | - | - | - | - | - |
| | a-12 | - | - | - | - | - | - | - | - | - | - | - | - | - |
| | a-13 | - | - | - | - | - | - | - | 10 | - | - | - | - | - |
| | a-14 | - | - | - | - | - | - | - | - | 10 | - | - | - | - |
| | a-15 | - | - | - | - | - | - | - | - | - | - | - | - | - |
| | Fibrer Type | Nonwoven Fabric | Nonwoven Fabric | Nonwoven Fabric | Nonwoven Fabric | Nonwoven Fabric | Nonwoven Fabric | Nonwoven Fabric | Woven Fabric (PA) | Woven Fabric (PEs) | Nonwoven Fabric | Nonwoven Fabric | Nonwoven Fabric | Nonwoven Fabric |
| Aliphatic Isocyanate (b-1) | b-1-1 (PDI) | 16.13 | 17.93 | 11.70 | 12.55 | 15.68 | 40.97 | 43.53 | 35.85 | 35.85 | - | - | 35.85 | 15.68 |
| | b-1-2 (HDI) | - | - | - | - | - | - | - | - | - | - | 37.96 | - | - |
| | b-2-1 (PPG, Mn3000) | 100 | 100 | - | 100 | - | - | - | - | - | - | - | - | - |

(continued)

| No. | | | Ex. 11 | Ex. 12 | Ex. 13 | Ex. 14 | Ex. 15 | Ex. 16 | Ex. 17 | Ex. 18 | Ex. 19 | Ex. 20 | Ex. 21 | Ex. 22 | Ex. 23 |
|---|---|---|---|---|---|---|---|---|---|---|---|---|---|---|---|
| Resin (b) | Polyol (b-2) | b-2-2 (PPG, Mn2000) | - | - | - | - | - | - | - | - | - | - | - | - | - |
| | | b-2-3 (PPG, Mn1000) | - | - | - | - | - | 100 | 100 | 100 | 100 | - | 100 | 100 | - |
| | | b-2-4 (PPG, Mn700) | - | - | - | - | - | - | - | - | - | - | - | - | - |
| | | b-2-5 (PPG, Mn2130) | - | - | 100 | - | - | - | - | - | - | - | - | - | - |
| | | b-2-6 (PPG, Mn1600) | - | - | - | - | 100 | - | - | - | - | - | - | - | 100 |
| | | b-2-7 (Amorphous PTMEG) | - | - | - | - | - | - | - | - | - | - | - | - | - |
| | Plasticizer (b-3) | | 100 | 200 | 0 | 0 | 0 | 0 | 0 | 0 | 0 | - | 0 | 0 | 0 |
| | Catalyst (b-4) | | 0.1 | 0.1 | 0.1 | 0.1 | 0.1 | 0.1 | 0.1 | 0.1 | 0.1 | - | 0.1 | 0.1 | 0.5 |
| | Defoaming Agent (b-5) | | 0.2 | 0.2 | 0.2 | 0.2 | 0.2 | 0.2 | 0.2 | 0.2 | 0.2 | - | 0.2 | 0.2 | 0.2 |
| | Silicone Resin (b-6) | Main Agent (b-6-1) | - | - | - | - | - | - | - | - | - | 50 | - | - | - |
| | | Curing Agent (b-6-2) | - | - | - | - | - | - | - | - | - | 50 | - | - | - |
| | Equivalent Ratio [NCO]/[OH] | | 0.90 | 1.00 | 0.70 | 0.70 | 0.70 | 0.80 | 0.85 | 0.70 | 0.70 | - | 0.70 | 0.70 | 0.70 |
| | Resin Type | | Urethane | Urethane | Urethane | Urethane | Urethane | Urethane | Urethane | Urethane | Urethane | Silicon | Urethane | Urethane | Urethane |

27

(continued)

| No. | | Ex. 11 | Ex. 12 | Ex. 13 | Ex. 14 | Ex. 15 | Ex. 16 | **Ex. 17** | Ex. 18 | Ex. 19 | Ex. 20 | Ex. 21 | Ex. 22 | Ex. 23 |
|---|---|---|---|---|---|---|---|---|---|---|---|---|---|---|
| Coated Layer (c) | Main Agent (c-1) | 20 | 20 | 20 | 20 | 20 | 20 | 20 | 20 | 20 | 20 | 20 | 0 | 20 |
| | Curing Agent (c-2) | 12 | 12 | 12 | 12 | 12 | 12 | 12 | 12 | 12 | 12 | 12 | 0 | 12 |
| | Diluent (c-2) | 30 | 30 | 30 | 30 | 30 | 30 | 30 | 30 | 30 | 30 | 30 | 0 | 30 |

[FIG. 3]

Table 3

| No. | | | Ex. 24 | Ex. 25 | Ex. 26 |
|---|---|---|---|---|---|
| Fiber Layer (a) | a-1 | | - | - | - |
| | a-2 | | - | - | - |
| | a-3 | | - | - | - |
| | a-4 | | - | - | - |
| | a-5 | | - | - | - |
| | a-6 | | - | - | - |
| | a-7 | | - | - | - |
| | a-8 | | - | - | - |
| | a-9 | | - | - | - |
| | a-10 | | - | - | - |
| | a-11 | | - | - | - |
| | a-12 | | - | - | - |
| | a-13 | | - | - | - |
| | a-14 | | - | - | - |
| | a-15 | | 5 | 10 | 10 |
| | Fibrer Type | | Nonwoven Fabric | Nonwoven Fabric | Nonwoven Fabric |
| Resin (b) | Aliphatic Isocyanate (b-1) | b-1-1 (PDI) | 35.85 | 35.85 | 35.85 |
| | | b-1-2 (HDI) | - | - | - |
| | Polyol (b-2) | b-2-1 (PPG, Mn3000) | - | - | - |
| | | b-2-2 (PPG, Mn2000) | - | - | - |
| | | b-2-3 (PPG, Mn1000) | - | - | - |
| | | b-2-4 (PPG, Mn700) | 100 | 100 | 100 |
| | | b-2-5 (PPG, Mn2130) | - | - | - |
| | | b-2-6 (PPG, Mn1600) | - | - | - |
| | | b-2-7 (Amorphous PTMEG) | - | - | - |
| | Plasticizer (b-3) | | 0 | 0 | 0 |
| | Catalyst (b-4) | | 0.1 | 0.1 | 0.1 |
| | Defoaming Agent (b-5) | | 0.2 | 0.2 | 0.2 |
| | Silicone Resin (b-6) | Main Agent (b-6-1) | - | - | - |
| | | Curing Agent (b-6-2) | - | - | - |
| | Equivalent Ratio [NCO]/[OH] | | 0.7 | 0.7 | 0.7 |
| | Resin Type | | Urethane | Urethane | Urethane |

(continued)

| No. | | Ex. 24 | Ex. 25 | Ex. 26 |
|---|---|---|---|---|
| Coated Layer (c) | Main Agent (c-1) | 20 | 20 | 20 |
| | Curing Agent (c-2) | 12 | 12 | 12 |
| | Diluent (c-2) | 30 | 30 | 30 |

[FIG. 4]

Table 4

| No. | | | Ex. 1 | Ex. 2 | Ex. 3 | Comparative Ex. 1 | Ex. 4 | Ex. 5 | Ex. 6 | Ex. 7 | Ex. 8 | Ex. 9 | Ex. 10 | Comparative Ex. 2 | Comparative Ex. 3 | Comparative Ex. 4 |
|---|---|---|---|---|---|---|---|---|---|---|---|---|---|---|---|---|
| Shape | | | Flat Plate | Flat Plate | Flat Plate | Flat Plate | Flat Plate | Flat Plate | Flat Plate | Flat Plate | Flat Plate | Flat Plate | Flat Plate | Flat Plate | Flat Plate | Flat Plate |
| Properties | Fiber Diameter | $\mu$m | 14.8 | 20.2 | 14.8 | 0.47 | 0.62 | 0.93 | 20.4 | 20.5 | 33.3 | 102.7 | 165.7 | 214.1 | 34.7 | 14.9 |
| | Peel Strength | N/cm | 1.18 | 1.26 | 4.81 | 1.03 | 1.21 | 1.08 | 1.31 | 1.44 | 1.48 | 1.03 | 0.96 | 1.12 | Measurement Impossible | Measurement Impossible |
| | C Hardness | - | 0 | 5 | 0 | 5 | 5 | 5 | 5 | 5 | 5 | 5 | 5 | 5 | 5 | 5 |
| | F Hardness | - | 60 | 80 | 60 | 80 | 80 | 80 | 80 | 80 | 80 | 80 | 80 | 80 | 80 | 80 |
| Evaluation | Incision Properties | - | 1 | 1 | 1 | 4 | 3 | 2 | 1 | 1 | 1 | 2 | 3 | 4 | 3 | 3 |
| | Thin Cutting Properties | - | 1 | 1 | 1 | 1 | 1 | 1 | 1 | 1 | 1 | 2 | 3 | 3 | 5 | 5 |
| | Returnability | - | 1 | 1 | 1 | 1 | 1 | 1 | 1 | 1 | 1 | 2 | 2 | 3 | 3 | 3 |
| | Stickiness | - | 1 | 1 | 1 | 1 | 1 | 1 | 1 | 1 | 1 | 1 | 1 | 1 | 1 | 1 |

[FIG. 5]

Table 5

| No. | | | Ex. 11 | Ex. 12 | Ex. 13 | Ex. 14 | Ex. 15 | Ex. 16 | Ex. 17 | Ex. 18 | Ex. 19 | Ex. 20 | Ex. 21 | Ex. 22 | Ex. 23 |
|---|---|---|---|---|---|---|---|---|---|---|---|---|---|---|---|
| Shape | | | Flat Plate | Flat Plate | Flat Plate | Flat Plate | Flat Plate | Flat Plate | Flat Plate | Flat Plate | Flat Plate | Flat Plate | Flat Plate | Flat Plate | Eyeball |
| Properties | Fiber Diameter | μm | 20.2 | 20.2 | 20.3 | 20.2 | 20.1 | 20.2 | 20.2 | 19.3 | 14.8 | 20.2 | 20.2 | 20.1 | 14.8 |
| | Peel Strength | N/cm | 0.18 | 0.30 | 1.56 | 1.11 | 1.45 | 1.07 | 1.03 | 0.33 | 0.90 | 1.33 | 1.10 | 1.21 | 1.18 |
| | C Hardness | - | 5 | 5 | 0 | 0 | 0 | 30 | 40 | 5 | 5 | 0 | 5 | 5 | 0 |
| | F Hardness | - | 80 | 80 | 40 | 50 | 60 | 100 | 100 | 80 | 80 | 50 | 80 | 80 | 60 |
| Evaluation | Incision Properties | - | 1 | 1 | 1 | 1 | 1 | 1 | 1 | 3 | 3 | 1 | 1 | 1 | 1 |
| | Thin Cutting Properties | - | 2 | 3 | 4 | 3 | 1 | 1 | 2 | 4 | 4 | 2 | 1 | 1 | 1 |
| | Returnability | - | 2 | 3 | 2 | 1 | 1 | 2 | 3 | 2 | 2 | 2 | 2 | 1 | 1 |
| | Stickiness | - | 1 | 1 | 1 | 1 | 1 | 1 | 1 | 1 | 1 | 1 | 1 | 2 | 1 |

[FIG. 6]

Table 6

| No. | | | Ex. 24 | Ex. 25 | Ex. 26 |
|---|---|---|---|---|---|
| Shape | | | Flat Plate | Flat Plate | Eyeball |
| Properties | Fiber Diameter | μm | 3.02 | 3.05 | 3.03 |
| | Peel Strength | N/cm | 1.47 | 1.25 | 1.15 |
| | C Hardness | - | 5 | 5 | 5 |
| | F Hardness | - | 80 | 80 | 80 |
| Evaluation | Incision Properties | - | 1 | 1 | 1 |
| | Thin Cutting Properties | - | 1 | 1 | 1 |
| | Returnability | - | 1 | 1 | 1 |
| | Stickiness | - | 1 | 1 | 1 |

While the illustrative embodiments of the present invention are provided in the above description, such is for illustrative purpose only and is not to be construed as limiting the scope of the present invention. Modification and variation of the present invention that will be obvious to those skilled in the art is to be covered by the following claims.

INDUSTRIAL APPLICATION

The simulated sclera, the simuladet eyeball, and the method for producing a simulated sclera of the present invention are preferably used in the practice of glaucoma surgery of an eyeball.

**Claims**

1.  A simulated sclera comprising:

    a plurality of fiber layers (a) and a resin (b) in contact with the fiber layer (a), wherein
    a fiber diameter of a fiber constituting the fiber layer (a) is 0.6 μm or more and 170.0 μm or less.

2.  The simulated sclera according to claim 1, wherein
    the peel strength between the plurality of fiber layers (a) is 0.20 N/cm or more.

3.  The simulated sclera according to claim 1, wherein
    the Asker F hardness of the resin (b) is 45 or more and 95 or less, or the Asker C hardness of the resin (b) is 5 or more and 35 or less.

4.  The simulated sclera according to claim 1, wherein
    the fiber layer (a) includes a nonwoven fabric.

5.  The simulated sclera according to claim 1, wherein
    the resin (b) includes a polyurethane.

6.  The simulated sclera according to claim 1 further comprising:
    a surface-coated layer (c).

7.  The simulated sclera according to claim 1 for the eyeball surgery practice.

8.  A simulated eyeball comprising:
    the simulated sclera according to claim 1.

9. A method for producing a simulated sclera, the simulated sclera comprising:

a plurality of fiber layers (a) and a resin (b) in contact with the fiber layer (a) and
having a fiber diameter of a fiber constituting the fiber layer (a) of 0.6 $\mu$m or more and 170.0 $\mu$m or less,
comprising the steps of:

laminating the plurality of fiber layers (a) and
impregnating the laminated fiber layers (a) with the resin (b).

FIG. 1

FIG. 2A

FIG. 2B

FIG. 3A

11

M1

M2

4

3

b

5   a(4)

FIG. 3B

c   a(4)   5

b

c

4

FIG. 4

FIG. 5

FIG. 6

FIG. 7

FIG. 8

FIG. 9

FIG. 10

FIG. 11

FIG. 12

FIG. 13

FIG. 14

FIG.15

FIG.16

**INTERNATIONAL SEARCH REPORT**

| | International application No. |
|---|---|
| | PCT/JP2019/036967 |

**A. CLASSIFICATION OF SUBJECT MATTER**
Int.Cl. G09B23/28(2006.01)i, C08G18/06(2006.01)i

According to International Patent Classification (IPC) or to both national classification and IPC

**B. FIELDS SEARCHED**

Minimum documentation searched (classification system followed by classification symbols)
Int.Cl. G09B23/00-29/14, C08G18/06

| Documentation searched other than minimum documentation to the extent that such documents are included in the fields searched | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-6477 A (SAN AROO KK) 14 January 2016, paragraphs [0023]-[0064] & US 2017/0186340 A1, paragraphs [0104]-[0159] & WO 2015/182568 A1 | 1-9 |
| Y | JP 2011-125695 A (ASAHI KASEI FIBERS CORP.) 30 June 2011, paragraph [0017] (Family: none) | 1-9 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 December 2019 (04.12.2019) | 17 December 2019 (17.12.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/036967

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-153847 A (JAPAN AVIATION ELECTRONICS INDUSTRY LTD.) 11 August 2011, paragraphs [0046]-[0047] (Family: none) | 3 |
| Y | JP 2005-181518 A (KOKEN CO., LTD.) 07 July 2005, paragraph [0006] (Family: none) | 5 |
| A | JP 2018-72393 A (MEIJO UNIVERSITY) 10 May 2018, entire text, all drawings (Family: none) | 1-9 |
| A | WO 2018/097031 A1 (NATIONAL UNIVERSITY CORPORATION NAGOYA UNIVERSITY) 31 May 2018, entire text, all drawings (Family: none) | 1-9 |
| A | WO 2010/084595 A1 (FRONTIER VISION CO., LTD.) 29 July 2010, entire text, all drawings (Family: none) | 1-9 |
| A | US 2017/0134668 A1 (NOVARTIS AG) 11 May 2017, entire text, all drawings & JP 2018-538566 A & WO 2017/077403 A1 & EP 3338270 A1 & DE 102015014324 A1 & TW 201720395 A & AU 2016349126 A1 & CA 3000592 A1 & CN 108352133 A & TW 201832743 A | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160063898

- WO 2012121291 A